(19) **Europäisches Patentamt / European Patent Office / Office européen des brevets**

(11) **EP 4 614 912 A1**

(12) **EUROPEAN PATENT APPLICATION**
published in accordance with Art. 153(4) EPC

(43) Date of publication:
**10.09.2025   Bulletin 2025/37**

(21) Application number: **22966842.1**

(22) Date of filing: **30.11.2022**

(51) International Patent Classification (IPC):
**H04L 27/00** (2006.01)    **H04L 27/36** (2006.01)

(52) Cooperative Patent Classification (CPC):
**H04L 27/00; H04L 27/36**

(86) International application number:
**PCT/CN2022/135587**

(87) International publication number:
**WO 2024/113249 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- **LI, Jiahui**
  **Shenzhen, Guangdong 518129 (CN)**
- **MA, Mengyao**
  **Shenzhen, Guangdong 518129 (CN)**
- **DU, Yinggang**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **DATA PROCESSING METHOD AND APPARATUS**

(57)    This application relates to the field of communication technologies, and discloses a data processing method and apparatus, to perform, on to-be-transmitted data, layered transmission that is based on data grouping and bit layering, to improve data transmission robustness. The method includes: A first apparatus performs layering processing on first data based on layering information to obtain N layers of data, where N is an integer greater than or equal to 2, and the layering processing includes data grouping and bit layering. The first apparatus separately performs coding and modulation on the N layers of data to obtain N bitstreams. The first apparatus sends the N bitstreams to a second apparatus.

FIG. 2

## Description

### TECHNICAL FIELD

This application relates to the field of communication technologies, and in particular, to a data processing method and apparatus.

### BACKGROUND

Sensing, imaging, artificial intelligence/machine learning (Artificial Intelligence/Machine Learning, AI/ML) computing, and the like at a physical layer are potential technologies and new application scenarios of future communication systems such as a cellular communication system and a Wi-Fi communication system. Future devices such as mobile terminals, sensors, and base stations have capabilities of environment sensing and imaging by using electromagnetic signals, to perform offline or real-time modeling and analysis on wireless transmission environments, and finally significantly improve performance of the communication systems. A computing capability and a battery capacity of a single device and an environment range that can be sensed are limited, and a sensing result, an imaging result, or an AI/ML computing result needs to be sent to a remote central node (where the central node may be a base station, a server, a cloud computing center, a terminal device with strong computing power, or the like) in a backhaul manner for information convergence. For the application such as sensing and imaging, collection of electromagnetic signals at a plurality of broadband frequencies and in different directions is involved. Therefore, a large amount of sensing and imaging data is obtained. For the application of AI/ML, model distribution, online training, and the like also relate to sending of a large amount of data, and layered compression processing needs to be performed before transmission.

In existing layering manners based on quality, space size, time, or the like, different layers of data are strongly dependent on each other, and each layer of data can be fully utilized only after all previous layers are correctly obtained. This results in poor transmission robustness.

### SUMMARY

This application provides a data processing method and apparatus, to perform, on to-be-transmitted data, layered transmission that is based on data grouping and bit layering, to improve data transmission robustness.

According to a first aspect, an embodiment of this application provides a data processing method. The method may be performed by a first apparatus. The method includes: The first apparatus performs layering processing on first data based on layering information to obtain N layers of data, where N is an integer greater than or equal to 2, and the layering processing includes data grouping and bit layering. The first apparatus separately performs coding and modulation on the N layers of data to obtain N bitstreams. The first apparatus sends the N bitstreams to a second apparatus.

Optionally, the layering information is configured by the first apparatus, or is received by the first apparatus from the second apparatus.

Optionally, the layering information is configured by the first apparatus and sent to the second apparatus.

Optionally, the method further includes: separately compressing the N layers of data, to improve transmission efficiency.

Optionally, the first apparatus may further send length information $L_1$ to $L_N$ of each layer of data to the second apparatus, to help the second apparatus obtain each layer of information through demodulation.

In the foregoing data processing method, the first apparatus may be a terminal device, a component (for example, a processor, a chip, or a chip system) of the terminal device, an apparatus used in collaboration with the terminal device, or the like. The second apparatus may be a network device, a component (for example, a processor, a chip, or a chip system) of the network device, an apparatus used in collaboration with the network device, or the like. Alternatively, the first apparatus may be a terminal device, a component of the terminal device, an apparatus used in collaboration with the terminal device, or the like; and the second apparatus is a terminal device different from the first apparatus, a component of the terminal device, or an apparatus used in collaboration with the terminal device.

In a possible design, the layering information includes a data unit size and a total quantity of bit planes. Correspondingly, the data grouping includes: grouping the first data based on the data unit size, to obtain a plurality of groups of data. Correspondingly, the bit layering includes: binarizing each piece of data in each of the groups of data into a one-dimensional bit vector, where a vector length is the total quantity of bit planes; arranging the one-dimensional bit vectors in a second dimension to form a bit matrix; and dividing the bit matrix into a plurality of bit groups, where N bit groups are obtained in total from the plurality of groups of data, and correspond to the N layers of data.

According to the foregoing method, in a layering manner combining the data grouping and the bit layering, a quantity of layers can be increased to improve flexibility, and self-correlation of the data can be fully explored to maintain good compression efficiency. In addition, a layer of data may be independently obtained through decoding at a receiving end, so that a burst error caused by channel jitter can be better coped with, to improve overall robustness.

In a possible design, the first data is multi-dimensional matrix data, and the data grouping includes: segmenting the first data to obtain a plurality of data segments, where the data unit size is a size of the data segment; processing each of the data segments into a one-dimensional vector; arranging the one-dimensional vectors in a second dimension to form a two-dimensional matrix; and dividing the two-dimensional matrix into the plurality of groups of data. Optionally, the data segments are grouped in one or more dimensions to obtain a plurality of groups of data segments, to obtain more flexible layers.

In a possible design, the data grouping includes: representing the first data in a form of an X-layer K-ary tree, where X and K are integers greater than 1, and the data unit size is K; and an $x^{th}$ layer of the K-ary tree corresponds to an $x^{th}$ time of grouping, and each of the groups of data corresponds to information about all subnodes of one or more nodes of the $x^{th}$ layer, where x=1, 2, ..., or X.

In the foregoing design, the first data can be correspondingly layered based on a data type of the first data, to flexibly adapt to data of different data types.

In a possible design, the layering information further includes a data grouping parameter.

In a possible design, the data grouping is uneven division, and the data grouping parameter includes a quantity T of data groups and a quantity $d_n$ of pieces of data included in each of the groups of data, where n=1, 2, ..., or T.

In a possible design, the data grouping is even division, and the data grouping parameter includes a quantity T of data groups or a quantity d of pieces of data included in each of the groups of data.

In a possible design, the layering information further includes a bit layering parameter.

In a possible design, the bit layering is uneven division, and the bit layering parameter includes a quantity $m_n$ of bit layers in each of the groups of data and a quantity $b_{n,i}$ of bit planes included in each of the bit groups, where n=1, 2, ..., or T, and i=1, 2, ..., or $m_n$.

In a possible design, the bit layering is uneven division and division manners in all the groups of data are the same, and the bit layering parameter includes a quantity m of bit layers in each of the groups of data and a quantity $b_i$ of bit planes included in each of the bit groups, where i=1, 2, ..., or m.

In a possible design, the bit layering is even division, and the bit layering parameter includes a quantity $m_n$ of bit layers included in each of the groups of data or a quantity $b_n$ of bit planes included in each of the bit groups, where n=1, 2, ..., or T.

In a possible design, the bit layering is even division and division manners in all the groups of data are the same, and the bit layering parameter includes a quantity m of bit layers included in each of the groups of data or a quantity b of bit planes included in each of the bit groups.

In the foregoing design, different parameters can be configured based on data division manners. Some division manners can be more simplified, and parameter configuration is more flexible.

In a possible design, the first data is in a complex form, and the method further includes: representing the first data as second data and third data, separately performing the same layering processing and the same coding and modulation on the second data and the third data to obtain a second sequence and a third sequence, and correspondingly concatenating the second sequence and the third sequence to obtain the N bitstreams, where the second data and the third data are respectively amplitude data and phase data, or are respectively real-part data and imaginary-part data.

In the foregoing design, more suitable layering processing can be performed based on a feature of the complex data.

In a possible design, the layering information further includes a quality requirement parameter. Correspondingly, the layering processing further includes: selecting Q layers of data from the N layers of data based on the quality requirement parameter, where Q is less than or equal to N. Optionally, performing a subsequent step on the N layers of data is replaced with performing a subsequent step on the Q layers of data.

In a possible design, the selecting Q layers of data from the N layers of data based on the quality requirement parameter includes: sorting the N layers of data in descending order of source contribution degrees, and selecting first Q layers of data, where Q is a minimum value that enables the selected layer of data to meet the quality requirement parameter. The source contribution degree indicates a deviation caused to the first data when the layer of data is missing.

In a possible design, the quality requirement parameter is a quality requirement threshold.

In the foregoing design, a part of data can be selected for transmission on a premise that a quality requirement is met, to reduce an amount of data to be processed and transmitted.

In a possible design, the method further includes: receiving modulation and coding indication information from the second apparatus, where the modulation and coding indication information indicates a modulation and coding scheme (modulation and coding scheme, MCS) corresponding to each layer of data in P layers of data, the P layers of data belong to the N layers of data, and the MCS corresponding to each layer of data in the P layers of data is determined based on a ranking of a source contribution degree of the layer of data in source contribution degrees of the P layers of data and a mapping policy between a ranking of a source contribution degree and an MCS, where the source contribution degree of each layer of data in the P layers of data indicates a deviation caused to the first data when the layer of data is missing, and P is less than or equal to N; separately performing coding and modulation on the P layers of data based on the MCS corresponding to each layer of data in the P layers of data, to obtain P bitstreams; and sending the N bitstreams to the second apparatus, where the N bitstreams include the P bitstreams and N-P bitstreams corresponding to N-P layers of data other than the P layers of data in the N layers of data. Optionally, the method further includes: sending source feature information to the second apparatus, where the source feature information includes the source contribution degree of each layer of data in the P layers of data.

According to the foregoing method, unequal error protection (unequal error protection, UEP)-based layering is performed on the to-be-transmitted data, and the source contribution degree of each layer of data is determined to indicate an importance degree of each layer of data, so that a data processing apparatus may configure the MCS for each layer of data based on the source contribution degree (namely, the importance degree) of each layer of data, and MCSs of different protection degrees are for different data layers in the data, to meet a transmission quality requirement at a data granularity, and improve transmission flexibility and overall data transmission robustness. In addition, UEP-based transmission of data through a single transport stream in a non-MIMO scenario is supported, so that an application scope of the UEP-based transmission can be improved.

Optionally, the deviation caused to the first data when each layer of data in the P layers of data is missing includes one or more of a mean square error, a normalized mean square error, an imaging error, a positioning error, or an inference error caused to the first data when each layer of data in the P layers of data is missing.

In the foregoing design, a corresponding deviation calculation method can be for the first data based on the data type of the first data, to flexibly adapt to data of different data types. This helps improve transmission performance.

In a possible design, that the MCS corresponding to each layer of data in the P layers of data is determined based on a ranking of a source contribution degree of the layer of data in source contribution degrees of the P layers of data and a mapping policy between a ranking of a source contribution degree and an MCS includes: The MCS corresponding to each layer of data in the P layers of data is determined based on channel state information between the first apparatus and the second apparatus, the ranking of the source contribution degree of the layer of data in the source contribution degrees of the P layers of data, and a mapping policy between channel state information, a ranking of a source contribution degree, and an MCS.

In the foregoing design, when the MCS corresponding to each layer of data is determined, the channel state information between the first apparatus and the second apparatus may be further considered, to further improve transmission reliability.

In a possible design, the method further includes: sending data length information of each layer of data in the N layers of data to the second apparatus; and receiving resource configuration information from the second apparatus, where the resource configuration information is for configuring M transport blocks TBs for transmitting the N layers of data, and M is an integer greater than or equal to 1. The sending the N bitstreams to a second apparatus includes: sending the N bitstreams to the second apparatus on the M TBs.

In the foregoing design, the data length information of each layer of data in the N layers of data is reported to the second apparatus, so that the second apparatus can determine, based on the data length information of and an MCS for each layer of data in the N layers of data, resources needed for transmitting the N bitstreams corresponding to the N layers of data, and accurately configure the resources for transmitting the N layers of data, to improve resource utilization and reduce a resource waste.

In a possible design, when a quantity O of transport streams for transmitting the N layers of data is greater than or equal to 2, the sending the N bitstreams to the second apparatus on the M TBs includes: dividing the N bitstreams into O groups of bitstreams based on sizes of the N bitstreams, to make a difference between data amounts of the O groups of bitstreams minimized; and separately sending the O groups of bitstreams to the second apparatus on the M TBs through the O transport streams.

In the foregoing design, the N bitstreams are divided into the O groups of bitstreams, so that the difference between the data amounts of the O groups of bitstreams is minimized, to balance load of the O transport streams, and improve transmission efficiency.

In a possible design, MCSs corresponding to any two layers of data in the P layers of data meet: A rate of an MCS corresponding to a layer A of data is less than or equal to a rate of an MCS corresponding to a layer B of data; and/or a modulation order of the MCS corresponding to the layer A of data is less than or equal to a modulation order of the MCS corresponding to the layer B of data, where the layer A of data is a layer of data corresponding to a larger source contribution degree in the two layers of data, and the layer B of data is a layer of data corresponding to a smaller source contribution degree in the two layers of data.

In the foregoing design, compared with the layer of data corresponding to the smaller source contribution degree, the layer of data corresponding to the larger source contribution degree may use a smaller rate and/or modulation order, to help improve transmission robustness of the layer of data corresponding to the larger source contribution degree, and ensure the transmission performance.

In a possible design, the method further includes: receiving actually-sendable-layer indication information from the second apparatus, where the actually-sendable-layer indication information indicates N' layers of data that are actually sendable, and N' is less than or equal to N.

Correspondingly, coding and modulation are separately performed on the N' layers of data to obtain N' bitstreams, and the N' bitstreams are sent to the second apparatus.

In a possible design, the actually-sendable-layer indication information is determined based on an actually scheduled transmission resource.

In the foregoing design, the actually sendable layer of data may be determined based on the actually scheduled transmission resource, so that the data can be transmitted more flexibly.

According to a second aspect, an embodiment of this application provides a data processing method. The method may be performed by a second apparatus. The method includes: The second apparatus performs layering processing on first data based on layering information to obtain N layers of data, where N is an integer greater than or equal to 2, and the layering processing includes data grouping and bit layering. The second apparatus separately performs coding and modulation on the N layers of data to obtain N bitstreams. The second apparatus sends the N bitstreams to a first apparatus.

Optionally, the layering information is configured by the second apparatus.

Optionally, the method further includes: separately compressing the N layers of data, to improve transmission efficiency.

Optionally, the second apparatus may further send length information $L_1$ to $L_N$ of each layer of data to the first apparatus, to help the first apparatus obtain each layer of information through demodulation.

In the foregoing data processing method, the first apparatus may be a terminal device, a component (for example, a processor, a chip, or a chip system) of the terminal device, an apparatus used in collaboration with the terminal device, or the like. The second apparatus may be a network device, a component (for example, a processor, a chip, or a chip system) of the network device, an apparatus used in collaboration with the network device, or the like. Alternatively, the first apparatus may be a terminal device, a component of the terminal device, an apparatus used in collaboration with the terminal device, or the like; and the second apparatus is a terminal device different from the first apparatus, a component of the terminal device, or an apparatus used in collaboration with the terminal device.

In a possible design, the layering information includes a data unit size and a total quantity of bit planes. Correspondingly, the data grouping includes: grouping the first data based on the data unit size, to obtain a plurality of groups of data. Correspondingly, the bit layering includes: binarizing each piece of data in each of the groups of data into a one-dimensional bit vector, where a vector length is the total quantity of bit planes; arranging the one-dimensional bit vectors in a second dimension to form a bit matrix; and dividing the bit matrix into a plurality of bit groups, where N bit groups are obtained in total from the plurality of groups of data, and correspond to the N layers of data.

In a possible design, the first data is multi-dimensional matrix data, and the data grouping includes: segmenting the first data to obtain a plurality of data segments, where the data unit size is a size of the data segment; processing each of the data segments into a one-dimensional vector; arranging the one-dimensional vectors in a second dimension to form a two-dimensional matrix; and dividing the two-dimensional matrix into the plurality of groups of data. Optionally, the data segments are grouped in one or more dimensions to obtain a plurality of groups of data segments, to obtain more flexible layers.

In a possible design, the data grouping includes: representing the first data in a form of an X-layer K-ary tree, where X and K are integers greater than 1, and the data unit size is K; and an $x^{th}$ layer of the K-ary tree corresponds to an $x^{th}$ time of grouping, and each of the groups of data corresponds to information about all subnodes of one or more nodes of the $x^{th}$ layer, where x=1, 2, ..., or X.

In a possible design, the layering information further includes a data grouping parameter.

In a possible design, the data grouping is uneven division, and the data grouping parameter includes a quantity T of data groups and a quantity $d_n$ of pieces of data included in each of the groups of data, where n=1, 2, ..., or T.

In a possible design, the data grouping is even division, and the data grouping parameter includes a quantity T of data groups or a quantity d of pieces of data included in each of the groups of data.

In a possible design, the layering information further includes a bit layering parameter.

In a possible design, the bit layering is uneven division, and the bit layering parameter includes a quantity $m_n$ of bit layers in each of the groups of data and a quantity $b_{n,i}$ of bit planes included in each of the bit groups, where n=1, 2, ..., or T, and i=1, 2, ..., or $m_n$.

In a possible design, the bit layering is uneven division and division manners in all the groups of data are the same, and the bit layering parameter includes a quantity m of bit layers in each of the groups of data and a quantity $b_i$ of bit planes included in each of the bit groups, where i=1, 2, ..., or m.

In a possible design, the bit layering is even division, and the bit layering parameter includes a quantity $m_n$ of bit layers included in each of the groups of data or a quantity $b_n$ of bit planes included in each of the bit groups, where n=1, 2, ..., or T.

In a possible design, the bit layering is even division and division manners in all the groups of data are the same, and the bit layering parameter includes a quantity m of bit layers included in each of the groups of data or a quantity b of bit planes included in each of the bit groups.

In a possible design, the first data is in a complex form, and the method further includes: representing the first data as second data and third data, separately performing the same layering processing and the same coding and modulation on the second data and the third data to obtain a second sequence and a third sequence, and correspondingly concatenating the second sequence and the third sequence to obtain the N bitstreams, where the second data and the third data are respectively amplitude data and phase data, or are respectively real-part data and imaginary-part data.

In a possible design, the layering information further includes a quality requirement parameter. Correspondingly, the layering processing further includes: selecting Q layers of data from the N layers of data based on the quality requirement parameter. Optionally, performing a subsequent step on the N layers of data is replaced with performing a subsequent step on the Q layers of data.

In a possible design, the selecting Q layers of data from the N layers of data based on the quality requirement parameter includes: sorting the N layers of data in descending order of source contribution degrees, and selecting first Q layers of data, where Q is a minimum value that enables the selected layer of data to meet the quality requirement parameter. The source contribution degree indicates a deviation caused to the first data when the layer of data is missing.

In a possible design, the quality requirement parameter is a quality requirement threshold.

According to a third aspect, an embodiment of this application provides a data processing apparatus. The apparatus has a function of implementing the method in the first aspect. The function may be implemented by hardware, or may be implemented by hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method in the first aspect.

In a possible design, the apparatus may be an entire terminal device or an entire network device.

According to a fourth aspect, an embodiment of this application provides a data processing apparatus. The apparatus has a function of implementing the method in the second aspect. The function may be implemented by hardware, or may be implemented by hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method in the second aspect.

In a possible design, the apparatus may be an entire terminal device or an entire network device.

According to a fifth aspect, an embodiment of this application provides a data processing apparatus. The data processing apparatus includes an interface circuit and a processor, and the processor and the interface circuit are coupled to each other. The processor is configured to implement the method in the first aspect by using a logic circuit or by executing instructions. The interface circuit is configured to receive a signal from a data processing apparatus other than the data processing apparatus and transmit the signal to the processor, or send, to a data processing apparatus other than the data processing apparatus, a signal that is from the processor. It can be understood that the interface circuit may be a transceiver, a transceiver machine, or an input/output interface.

Optionally, the data processing apparatus may further include a memory, configured to: store instructions to be executed by the processor, store input data needed by the processor to run instructions, or store data generated after the processor runs instructions. The memory may be a physically independent unit, or may be coupled to the processor, or the processor includes the memory.

According to a sixth aspect, an embodiment of this application provides a data processing apparatus. The data processing apparatus includes an interface circuit and a processor, and the processor and the interface circuit are coupled to each other. The processor is configured to implement the method in the second aspect by using a logic circuit or by executing instructions. The interface circuit is configured to receive a signal from a data processing apparatus other than the data processing apparatus and transmit the signal to the processor, or send, to a data processing apparatus other than the data processing apparatus, a signal that is from the processor. It can be understood that the interface circuit may be a transceiver, a transceiver machine, or an input/output interface.

Optionally, the data processing apparatus may further include a memory, configured to: store instructions to be executed by the processor, store input data needed by the processor to run instructions, or store data generated after the processor runs instructions. The memory may be a physically independent unit, or may be coupled to the processor, or the processor includes the memory.

According to a seventh aspect, an embodiment of this application provides a computer-readable storage medium. The storage medium stores a computer program or instructions. When the computer program or the instructions are executed by a processor, the method in the first aspect or the second aspect can be implemented.

According to an eighth aspect, an embodiment of this application further provides a computer program product, including a computer program or instructions. When the computer program or the instructions are executed by a processor, the method in the first aspect or the second aspect can be implemented.

According to a ninth aspect, an embodiment of this application further provides a chip system. The chip system includes a processor and a memory. The processor is coupled to the memory. The memory is configured to store a program or instructions. When the program or the instructions are executed by the processor, the method in the first aspect or the second aspect can be implemented.

For technical effects that can be achieved in the second aspect to the ninth aspect, refer to the technical effects that can be achieved in the first aspect. Details are not described herein again.

## BRIEF DESCRIPTION OF DRAWINGS

FIG. 1 is a diagram of an architecture of a communication system according to an embodiment of this application;
FIG. 2 is a first diagram of a data processing method according to an embodiment of this application;
FIG. 3 is a diagram of a traversal rule according to an embodiment of this application;
FIG. 4 is a diagram of a layering manner according to an embodiment of this application;
FIG. 5 is a diagram of grouping of a K-ary tree according to an embodiment of this application;
FIG. 6 is a diagram of a data grouping parameter and a bit layering parameter according to an embodiment of this application;
FIG. 7 is a second diagram of a data processing method according to an embodiment of this application;
FIG. 8 is a third diagram of a data processing method according to an embodiment of this application;
FIG. 9 is a diagram of source feature information according to an embodiment of this application;
FIG. 10 is a diagram of division into code blocks according to an embodiment of this application;
FIG. 11 is a diagram of a transport block combination according to an embodiment of this application;
FIG. 12 is a fourth diagram of a data processing method according to an embodiment of this application;
FIG. 13 is a first diagram of a structure of a data processing apparatus according to an embodiment of this application; and
FIG. 14 is a second diagram of a structure of a data processing apparatus according to an embodiment of this application.

## DESCRIPTION OF EMBODIMENTS

Technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system, or a new radio (new radio, NR) mobile communication system. The technical solutions provided in this application may be further applied to a future communication system, for example, a 6th generation mobile communication system. The communication system may alternatively be a public land mobile network (public land mobile network, PLMN), a device-to-device (device-to-device, D2D) network, a Wi-Fi network, a machine-to-machine (machine-to-machine, M2M) network, an IoT network, or another network.

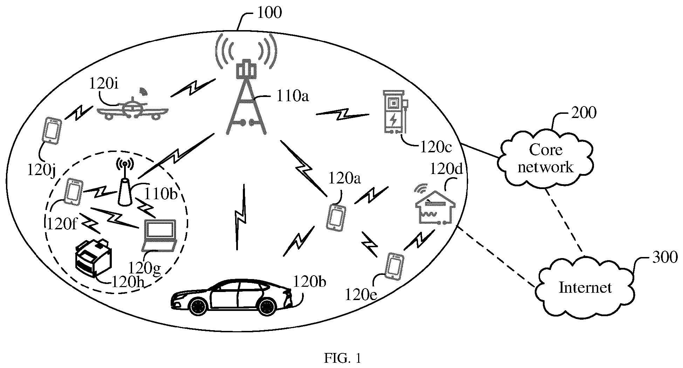

An architecture of the communication system to which embodiments of this application are applied may be shown in FIG. 1. The communication system includes a radio access network 100 and a core network 200. Optionally, the communication system may further include an Internet 300. The radio access network 100 may include at least one network device, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is an automobile, 120c is a fuel dispenser, 120d is a home access point (home access point, HAP) deployed indoors or outdoors, 120g is a notebook computer, 120h is a printer, and 120i is an uncrewed aerial vehicle. A same terminal device or network device may provide different functions in different application scenarios. For example, the mobile phones in FIG. 1 include 120a, 120e, 120f, and 120j. The mobile phone 120a may access the base station 110a, connect to the automobile 120b, directly communicate with the mobile phone 120e, and access the HAP. The mobile phone 120b may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

The terminal device is connected to the network device, and the network device is connected to the core network. A core network device and the network device may be different physical devices independent of each other; functions of a core network device and logical functions of the network device may be integrated into a same physical device; or some functions of a core network device and some functions of the network device may be integrated into one physical device. Terminal devices may be connected to each other and network devices may be connected to each other in a wired or wireless manner. FIG. 1 is merely schematic. The communication system may further include another device, for example, a wireless relay device and a wireless backhaul device that are not shown in FIG. 1.

The network device may also be referred to as a radio access network device; and may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a future mobile communication system, an access node in a Wi-Fi system, or the like, or may be a module or a unit, for example, a central unit (central unit, CU) or a distributed unit (distributed unit, DU), that completes a part of functions of a base station. The CU herein completes functions of a radio resource control layer and a packet data convergence protocol (packet data convergence protocol, PDCP) layer of the base station, and may further complete a function of a service data adaptation protocol (service data adaptation protocol, SDAP) layer. The DU completes functions of a radio link control layer and a medium access control (medium access control, MAC) layer of the base station, and may further complete a part or all of functions of a physical layer. For specific descriptions of the foregoing protocol layers, refer to related technical specifications in the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

The terminal device may also be referred to as a terminal, user equipment (user equipment, UE), a mobile station, a mobile terminal, or the like. The terminal device may be widely used in various scenarios, for example, D2D, vehicle-to-everything (vehicle-to-everything, V2X) communication, machine type communication (machine type communication, MTC), an Internet of things (Internet of things, IoT), virtual reality, augmented reality, industrial control, self-driving, telemedicine, a smart grid, smart furniture, smart office, smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Roles of the network device and the terminal device may be relative. For example, the helicopter or uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device, to be specific, 110a and 120i communicate with each other by using a radio air interface protocol. Certainly, 110a and 120i may alternatively communicate with each other by using an interface protocol between network devices. In this case, relative to 110a, 120i is also a network device. Therefore, both the network device and the terminal device may be collectively referred to as communication apparatuses. 110a and 110b in FIG. 1 may be referred to as communication apparatuses having a function of the network device, and 120a to 120j in FIG. 1 may be referred to as communication apparatuses having a function of the terminal device.

Communication may be performed between a network device and a terminal device, between network devices, or between terminal devices by using a licensed spectrum, an unlicensed spectrum, or both a licensed spectrum and an unlicensed spectrum, or may be performed by using a spectrum below 6 gigahertz (gigahertz, GHz), a spectrum above 6 GHz, or both a spectrum below 6 GHz and a spectrum above 6 GHz. A spectrum resource for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device herein may be a control center in the foregoing application scenarios such as the smart grid, the industrial control, the intelligent transportation, and the smart city. The function of the terminal device may alternatively be performed by a module (for example, a chip or a modem) in the terminal device, or may be performed by an apparatus including the function of the terminal device.

Currently, environment sensing, imaging, artificial intelligence/machine learning (Artificial Intelligence/Machine Learning, AI/ML) computing, and the like at a physical layer have become potential technologies and new application scenarios of communication systems. Future devices such as mobile terminals, sensors, and base stations have capabilities of environment sensing and imaging by using electromagnetic signals, to perform offline or real-time modeling and analysis on wireless transmission environments, and finally significantly improve performance of the communication systems. Because a computing capability and a battery capacity of a single device and an environment range that can be sensed are limited, a sensing result, an imaging result, or an AI/ML computing result needs to be sent to a remote central node (where the central node may be a base station, a server, a cloud computing center, a terminal device with strong computing power, or the like) in a backhaul manner for information convergence.

For the application such as sensing and imaging, collection of electromagnetic signals at a plurality of broadband frequencies and in different directions is involved. Therefore, a large amount of sensing and imaging data is obtained, and a compression operation needs to be performed before wireless backhaul, to reduce consumption of wireless transmission resources. For the application such as AI/ML, model distribution, online training, and the like also relate to sending of a large amount of data, and compression processing needs to be performed before transmission.

To improve compression efficiency by using internal correlation of data, layered compression may be performed on the data, for example, based on quality/space sizes/time. However, different layers of data are strongly dependent on each other, and each layer of data can be fully utilized only after all previous layers that are more important are correctly received and obtained through decoding. This results in poor data transmission robustness.

In view of this, this application provides a data processing method and apparatus, to perform, on to-be-transmitted data, layering processing that is based on data grouping and bit layering, so that different layers of data are independent of each other while internal correlation of the data is fully utilized. This improves data transmission robustness and improves layering flexibility. The following describes embodiments of this application in detail with reference to the accompanying drawings.

In addition, it should be understood that ordinal numbers such as "first" and "second" in embodiments of this application are intended to distinguish between a plurality of objects, and are not for limiting sizes, content, a sequence, a time sequence, priorities, importance degrees, or the like of the plurality of objects. For example, a first apparatus and a second apparatus do not indicate different priorities, importance degrees, or the like corresponding to the two apparatuses.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between associated objects. For example, A/B indicates A or B. "At least one of the following items (pieces)" or a similar expression thereof means any combination of these items, including any combination of singular items (pieces) or plural items (pieces). For example, at least one item (piece) of a, b, or c indicates: a, b, c, a and b, a and c, b and c, or a, b, and c, where a, b, and c may be singular or plural.

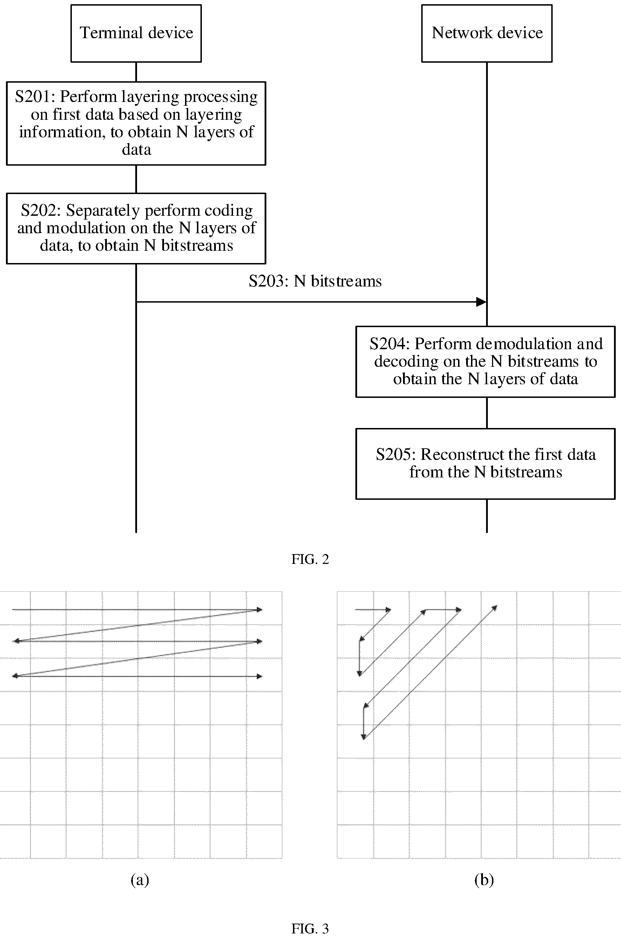

FIG. 2 is a diagram of a data processing method according to an embodiment of this application. In FIG. 2, the method is illustrated by using an example in which the method is performed by a network device and a terminal device. However, execution bodies of the method are not limited in this application. For example, the network device in FIG. 2 may alternatively be a second apparatus, and the second apparatus may be a network device, a component (for example, a processor, a chip, or a chip system) of the network device, or an apparatus used in collaboration with the network device. The terminal device in FIG. 2 may alternatively be a first apparatus, and the first apparatus may be a terminal device, a component (for example, a processor, a chip, or a chip system) of the terminal device, or an apparatus used in collaboration with the terminal device. The method includes the following steps.

S201: The terminal device performs layering processing on first data based on layering information, to obtain N layers of data, where N is an integer greater than or equal to 2. The layering processing includes data grouping and bit layering. When N is equal to 2, correspondingly, one group is obtained through the data grouping, and two layers are obtained through the bit layering; or two groups are obtained through the data grouping, and one layer is obtained in each group through the bit layering. Compared with a quality/space size/time based layering manner in which different layers of data are strongly dependent on each other, the layering manner based on the data grouping and the bit layering enables the layers of data to be independent of each other and independently obtained through decoding at a receiving end, to better cope with a burst error caused by channel jitter, and improve overall robustness.

The data grouping includes: grouping the first data based on a data unit size, to obtain a plurality of groups of data.

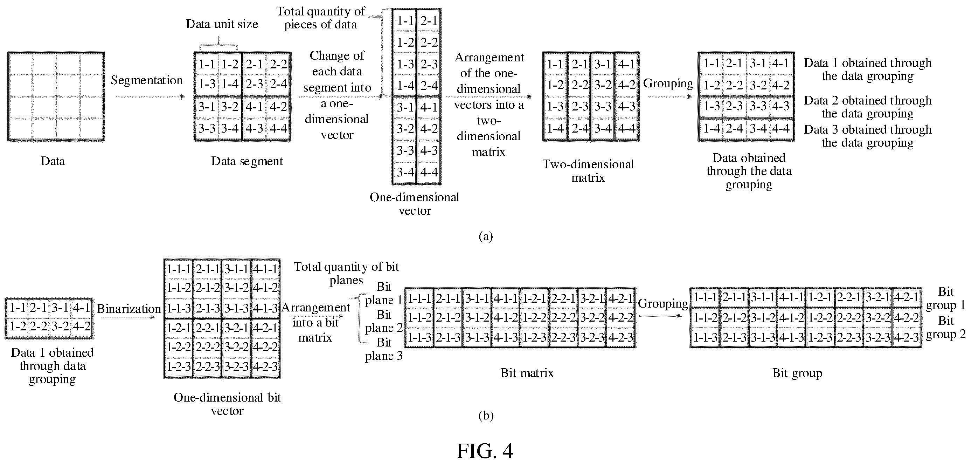

The data grouping may be implemented in different manners based on different data forms, to fully utilize internal correlation of the data. If the first data is in a multi-dimensional matrix form, the data grouping includes segmenting the first data. A size of a data segment in each dimension is denoted as the data unit size. Optionally, if sizes in all dimensions are the same, the data unit size is a size in any dimension. The data segments are traversed according to a specific rule to obtain one-dimensional vectors. The segments are traversed according to the specific rule, and the one-dimensional vectors of the segments are arranged in a second dimension, to form a two-dimensional matrix. Specifically, the specific rule may be a manner of sequentially extracting data by row from left to right (refer to (a) in FIG. 3), a manner of extracting data in a zigzag shape (refer to (b) in FIG. 3), or the like. The two-dimensional matrix is divided into the plurality of groups of data, where the division may be even division or uneven division. For example, the data segments are changed into column vectors through scanning according to the rule of sequentially extracting data by row from left to right. The column vectors are arranged by row from left to right according to the rule of sequentially extracting data by row from left to right, to form the two-dimensional matrix. The two-dimensional matrix is divided by row into the plurality of groups of data. Refer to (a) in FIG. 4. Alternatively, the data segments may be changed into row vectors, the row vectors are arranged by column to form a two-dimensional matrix, and the two-dimensional matrix is divided by column into the plurality of groups of data.

If the data grouping is even division, a data grouping parameter includes a quantity T of data groups or a quantity $d_n$ of pieces of data included in each of the groups of data. Because $T*d_n$=Total quantity of pieces of data, and the total quantity of pieces of data may be calculated based on the foregoing data unit size, a value of either T or $d_n$ can be obtained provided that a value of the other is given. For example, if the data unit size is (8, 8), the total quantity of pieces of data is 8*8=64, and T=4, the four groups of data each include 16 pieces of data. If the data grouping is uneven division, a data grouping parameter includes a quantity T of data groups and a quantity $d_n$ of pieces of data included in each group of data. For example, the data unit size is (8, 8), the total quantity of pieces of data is 8*8=64, T=4, the four groups of data respectively include 20, 20, 12, and 12 pieces of data, and quantities of pieces of data respectively included in the groups may be denoted as $d_1$=20, $d_2$=20, $d_3$=12, and $d_4$=12. Optionally, because $\sum_{n=1}^{T}$ dn=Total quantity of pieces of data, and the total quantity of pieces of data may be calculated based on the data unit size, only quantities of pieces of data in first T-1 groups may be recorded. For example, the data unit size is (8, 8), the total quantity of pieces of data is 8*8=64, T=4, the four groups of data respectively include 20, 20, 12, and 12 pieces of data, and quantities of pieces of data respectively included in the groups may be denoted as $d_1$=20, $d_2$=20, and $d_3$=12.

Optionally, the data grouping further includes: grouping the first data in one or more dimensions, and grouping each group according to the foregoing data grouping method, to obtain more flexible layers. For example, AI data (for example, intermediate gradient data during online training or distributed model data) may be represented as a three-dimensional or four-dimensional signal. First three dimensions respectively correspond to a length, a width, and a depth (a quantity of channels) of a network, and an optional fourth dimension may represent different network layers of a model. Four groups may be obtained through grouping based on the depth, to obtain four groups of depth data. In each depth group, data grouping is performed once again, to obtain a plurality of groups of data. Grouping may be performed for a plurality of times based on different dimensions.

Optionally, the data grouping further includes: performing a transform operation, for example, discrete cosine transform (Discrete Cosine Transform, DCT), discrete wavelet transform (Discrete Wavelet Transform, DWT), or discrete Fourier transform (discrete Fourier transform, DFT), on the first data, to improve compression efficiency. The transform operation may be performed before or after the data segmentation.

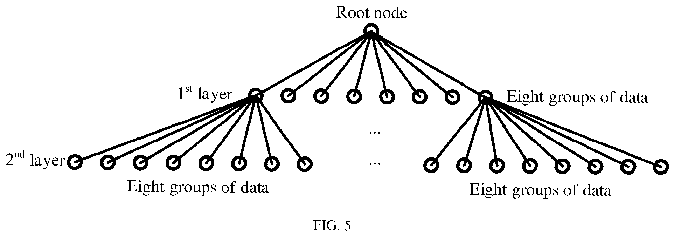

If the first data is represented in a form of an X-layer K-ary tree, where X and K are integers greater than 1, an $x^{th}$ layer of the K-ary tree corresponds to an $x^{th}$ time of grouping, and each of the groups of data corresponds to information about all subnodes of one or more nodes of the $x^{th}$ layer, where x=1, 2, ..., or X. The data unit size is a quantity K of branches of tree nodes. It can be understood that the X-layer K-ary tree may be grouped for y times, where y is less than or equal to X. A value of y is not limited in this application. For example, non-zero locations and data values in a sparse point cloud signal are represented in a form of an octree. Refer to FIG. 5. A $1^{st}$ layer of the octree corresponds to a $1^{st}$ time of grouping, and there are eight nodes in total. Information about all subnodes of each node is one group of data, and there are eight groups of data in total. Alternatively, two nodes may be used as one group, and there are four groups of data in total. Correspondingly, a $2^{nd}$ layer of the octree corresponds to a $2^{nd}$ time of grouping. Each subnode of the $1^{st}$ layer has eight subnodes at the $2^{nd}$ layer, and there are 8*8=64 subnodes in total at the $2^{nd}$ layer. Information about all subnodes of each node is one group of data, and there are 64 groups of data in total.

A quantity of layers obtained through the bit layering is limited by a quantized bit width. Therefore, flexibility is poor. In addition, the data is completely split into independent bit layers, and the internal correlation of the data cannot be fully utilized. This results in a loss of compression efficiency. The data grouping is added on the basis of the bit layering, so that a quantity of layers can be increased, and the flexibility can be improved. Different grouping processing is performed on different forms of data, and the data transform step is added, so that the self-correlation of the data can be fully explored, to maintain good compression efficiency.

The bit layering includes: binarizing each piece of data in each of the groups of data into a one-dimensional bit vector, where a vector length is a total quantity of bit planes; arranging the one-dimensional bit vectors in a second dimension according to a specific rule to form a bit matrix; and dividing the bit matrix into a plurality of bit groups, where the division may be even division or uneven division. For example, each piece of data in each of the groups of data is changed into a bit column vector, the bit column vectors are arranged by row according to the rule of sequentially extracting data by row from left to right, to form a bit matrix, and the bit matrix is divided by row into a plurality of bit groups. Refer to (b) in FIG. 4. N bit groups are obtained in total from all the groups of data, and correspond to the N layers of data. Alternatively, each piece of data in each of the groups of data may be changed into a bit row vector, the bit row vectors are arranged by column into a bit matrix, and the bit matrix is divided by column into a plurality of bit groups.

If the bit layering is even division, a bit layering parameter includes a quantity $m_n$ of bit layers included in each of the groups of data or a quantity $b_n$ of bit planes in each of the groups. Because $m_n * b_n$ = Total quantity of bit planes, a value of either $m_n$ or $b_n$ can be obtained provided that a value of the other is given. Optionally, if bit layering manners in all the groups of data are the same, only a quantity m of bit layers included in each of the groups of data and a quantity b of bit planes included in each of the bit groups need to be sent. For example, if the total quantity of bit planes is 10, and m=5, the five bit groups each include two bit planes. If the bit layering is uneven division, a bit layering parameter includes a quantity $m_n$ of bit layers in each of the groups of data and a quantity $b_{n,i}$ of bit planes included in each of the bit groups (where i=1, ..., or $m_n$). Optionally, because $\sum_{i=1}^{m_n} b_{n,i} = \text{Total quantity of bit planes}$, only quantities of bit planes in first $m_n$-1 groups may be recorded. Optionally, if bit layering manners in all the groups of data are the same, only a quantity m of bit layers included in each of the groups of data and a quantity $b_i$ (where i=1, ..., or m) of bit planes included in each of the bit groups need to be sent. For example, the total quantity of bit planes is 10, m=4, the four bit groups respectively include three, three, two, and two bit planes, and quantities of bit planes included in the groups may be denoted as $b_1$=3, $b_2$=3, and $b_3$=2.

The data unit size, the total quantity of bit planes, the data grouping parameter, and the bit layering parameter above are grouping information.

Examples of configuring the data grouping parameter and the bit layering parameter are as follows:

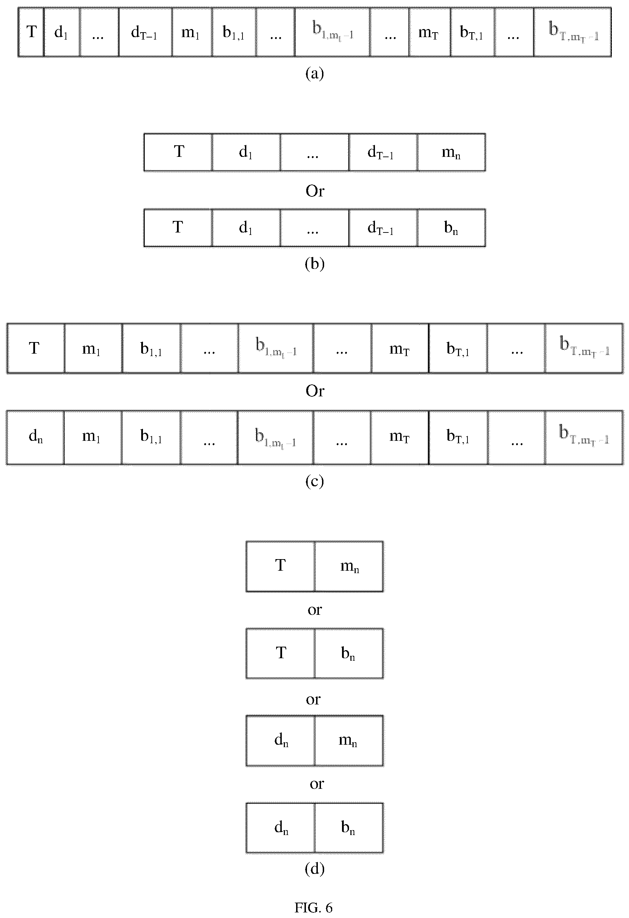

Both data and bits are unevenly divided: Refer to (a) in FIG. 6.

Data is unevenly divided, and bits are evenly divided: Refer to (b) in FIG. 6.

Data is evenly divided, and bits are unevenly divided: Refer to (c) in FIG. 6.

Both data and bits are evenly divided: Refer to (d) in FIG. 6.

Optionally, to further reduce a data transmission amount and improve transmission performance, the terminal device may further separately perform compression processing on the obtained N layers of data.

The terminal device may further send length information $L_1$ to $L_N$ of each layer of data to the network device, so that the network device obtains each layer of information through demodulation.

The layering information may be predefined in a protocol, determined by the terminal device, or determined by the network device based on capability information of the terminal device and sent to the terminal device. This is not limited in this application. The capability information of the terminal device includes a layering indicator, for example, a maximum quantity of layers or previously used layering configuration information, supported by the terminal.

If the layering information is determined by the terminal device, the terminal device sends the layering information to the network device.

A data type of the first data to be transmitted by the terminal device may be indicated to or configured for the terminal device by the network device by using radio resource control (radio resource control, RRC) signaling or the like sent to the terminal device. An information element (information element, IE) of a physical layer data type (PHYData-DataType) field may be set in the RRC signaling or the like to indicate different data types. The data types that may be indicated by the PHYData-DataType field include but are not limited to the following types:

(1) sensing signal (SensingSignal): an original sensing signal, which may be in a form of a real signal or a complex signal;
(2) imaging signal (ImagingSignal): data obtained by performing imaging processing on the original sensing signal;
(3) 3D dense point cloud signal (DensePointCloudSignal): a complete point cloud signal, where each spatial location has a value;
(4) 3D sparse point cloud signal (SparsePointCloudSignal): a part of signal points with high strength that are obtained by performing a sparsification operation on the dense point cloud signal; and
(5) AI/ML signal (AIMLSignal): a signal sent during AI/ML inference or training.

Optionally, the layering information further includes a quality requirement parameter for determining a layer that needs to be transmitted. The quality requirement parameter may be a quality requirement threshold $D_{th}$. A quality requirement may be a distortion requirement or an error requirement. Q layers of data are selected from the N layers of data based on the quality requirement parameter, and performing a subsequent step on the N layers of data is replaced with performing a subsequent step on the Q layers of data, to reduce an amount of data to be processed and transmitted. Specifically, the N layers of data are sorted in descending order of source contribution degrees, and first Q layers of data are selected, where Q is a minimum value that enables the selected layer of data to meet the quality requirement parameter. For example, a set of layers of data sorted in descending order of the source contribution degrees is $\{l_1, ..., l_N\}$.

The following provides a manner of calculating Q:

$$Q = \arg \min_{K} K, \text{s. t.} \, D(\{I_1, ..., I_K\}) \leq D_{th}, \text{where} \, K \leq N$$

$D(\cdot)$ represents a function for calculating distortion or an error, and an input is the set of layers of data. Using a normalized mean square error as an example, $D(\{I_1, ..., I_K\})$ represents a normalized mean square error caused when layers $I_1, ..., I_K$ of data are all correctly transmitted.

The terminal device may determine a source contribution degree of each layer of data in the N layers of data based on a deviation caused to the first data when the layer of data is missing. For example, for the source contribution degree of each layer of data in the N layers of data, the terminal device may use a deviation, for example, a mean square error (mean square error, MSE) or a normalized mean square error (normalized mean square error, NMSE), of the first data excluding the layer of data relative to the complete first data as the source contribution degree of the layer of data.

In an example, the first data is denoted as **Y,** and reconstructed data obtained by excluding an $n^{th}$ layer of data is denoted as $Y'_n$. In this case, a mean square error corresponding to the $n^{th}$ layer of data may be obtained as $\text{MSE}_n = \frac{1}{L}\sum_{i=1}^{L}(\mathbf{Y}(i) - \mathbf{Y}'_n(i))^2$, where L represents a length of the first data (for example, a quantity of bits or a quantity of coefficients in the data).

In some implementations, the terminal device may further use a corresponding source contribution degree determining manner based on the data type of the first data, to more truly reflect an importance degree of each layer of data in the first data. For example, when the data type of the first data is the sensing signal, the source contribution degree of each layer of data may be determined based on the deviation, for example, the mean square error or the normalized mean square error, caused to the first data when the layer of data is missing. When the data type of the first data is the imaging signal, the source contribution degree of each layer of data may be determined based not only on the deviation, for example, the mean square error or the normalized mean square error, caused to the first data when the layer of data is missing but also on an imaging error caused to the first data when the layer of data is missing. When the data type of the first data is the 3D dense point cloud signal, the source contribution degree of each layer of data may be determined based not only on the deviation, for example, the mean square error or the normalized mean square error, caused to the first data when the layer of data is missing but also on a geometric feature deviation, for example, a chamfer distance error, caused to the first data when the layer of data is missing. When the data type of the first data is the 3D sparse point cloud signal, the source contribution degree of each layer of data may be determined based not only on the deviation, for example, the mean square error or the normalized mean square error, caused to the first data when the layer of data is missing but also on a positioning error caused to the first data when the layer of data is missing. When the data type of the first data is the AI/ML signal, the source contribution degree of each layer of data may be determined based not only on the deviation, for example, the mean square error or the normalized mean square error, caused to the first data when the layer of data is missing but also on an inference error (an inference error of an AI/ML model corresponding to the AI/ML signal) caused to the first data when the layer of data is missing.

In some implementations, the source contribution degree determining manner may alternatively be indicated or configured by the network device by sending RRC signaling or the like to the terminal device. For example, a layer importance (LayerImportance) field may be set in the RRC signaling or the like to indicate the source contribution degree determining manner, for example, a manner of using the mean square error.

Optionally, the layering information further includes a quality requirement switch indicating whether to select the Q layers of data based on the quality requirement parameter.

Optionally, the terminal device sends a selected-layer indication to the network device, to indicate the selected Q layers of data. Specifically, the selected-layer indication may be an N-bit bitmap, where each bit represents one layer, and a selected layer and an unselected layer are represented by different symbols. For example, 1 represents the selected layer, and 0 represents the unselected layer.

Optionally, a data feature indicator may include the selected-layer indication and data length information $L_1$ to $L_{M_0}$, and a source contribution degree $C_1$ to $C_{M_0}$ that correspond to a minimum quantity of layers that need to be sent. Optionally, if the quality requirement parameter is not configured, the Q layers of data may be selected with reference to a previously used value or previous-phase resource allocation.

S202: The terminal device separately performs coding and modulation on the N layers of data, to obtain N bitstreams.

Optionally, if the first data is in a complex form, the first data may be represented as second data and third data. The layering in S201 is separately performed on the second data and the third data in a same manner, and same channel coding and modulation are performed on the second data and the third data, to obtain a second sequence and a third sequence. The obtained second sequence and third sequence are concatenated to obtain the N bitstreams. The second data and the third data are respectively amplitude data and phase data, or are respectively real-part data and imaginary-part data. S203: The terminal device sends the N bitstreams to the network device. Correspondingly, the network device receives the N bitstreams.

S204: The network device performs demodulation and decoding on the N bitstreams to obtain the N layers of data.

S205: The network device reconstructs the first data from the N layers of data.

The reconstruction is an inverse process of the layering, to restore the N layers of data to the first data. Generally, there is a difference between data obtained by reconstructing the first data and the first data. A smaller difference between the data obtained by reconstructing the first data and the first data indicates a smaller data loss in a compression and transmission process, and a larger difference between the data obtained by reconstructing the first data and the first data indicates a larger data loss.

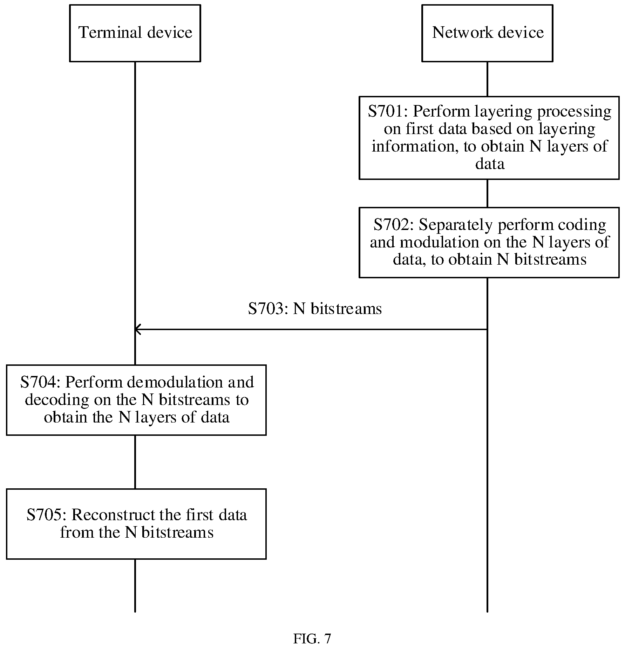

The foregoing describes layered transmission of the to-be-transmitted first data mainly from a perspective of uplink data transmission. It can be understood that downlink transmission and the uplink transmission are mainly different in data transmission directions. Based on a same or similar inventive concept, the data processing manner or the method for interaction between the terminal device and the network device in the uplink transmission method embodiment may also be applied to a downlink transmission method. FIG. 7 is a diagram of another data processing method according to an embodiment of this application. The method includes the following steps.

S701: A network device performs layering processing on first data based on layering information, to obtain N layers of data, where N is an integer greater than or equal to 2, and the layering processing includes data grouping and bit layering. For an implementation, refer to related descriptions in step S201 in the foregoing embodiment. Details are not described herein again.

The layering information may include a data unit size, a total quantity of bit planes, a data grouping parameter, and a bit layering parameter; and optionally, further include a quality requirement parameter. For an implementation, refer to related descriptions in step S201 in the foregoing embodiment. Details are not described herein again.

The layering information may be predefined in a protocol, or determined by the network device based on capability information of a terminal device and sent to the terminal device.

S702: The network device separately performs coding and modulation on the N layers of data, to obtain N bitstreams.

S703: The network device sends the N bitstreams to the terminal device. Correspondingly, the terminal device receives the N bitstreams.

S704: The terminal device performs demodulation and decoding on the N bitstreams to obtain the N layers of data.

S705: The terminal device reconstructs the first data from the N layers of data.

Implementation principles of steps S702 to S705 are similar to implementation principles of steps S202 to S205. For specific implementations, refer to descriptions in S202 to S205. Details are not described again.

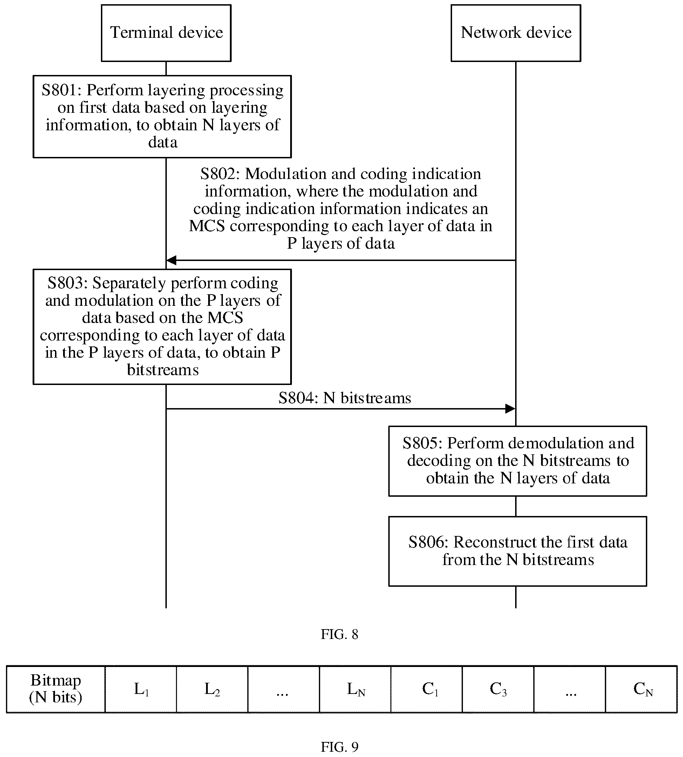

The foregoing layering manner and unequal error protection (unequal error protection, UEP) (which may also be referred to as unequal protection) are combined for transmission. Because more layers may be configured, fine-grained rate control may be supported, and resource allocation and transmission design can be performed in close combination with a data source feature and channel transmission, to adapt to different source types and transmission reliability requirements, and more flexibly support different UEP-based transmission configurations at a physical layer. FIG. 8 is a diagram of still another data processing method according to an embodiment of this application. The method includes the following steps.

S801: A terminal device performs layering processing on first data based on layering information, to obtain N layers of data, where N is an integer greater than or equal to 2. The layering processing in this step may include the layering that is described in S201 in the foregoing embodiment and that is implemented by combining the data grouping and the bit layering, and a related feature may be combined and implemented with this embodiment as an implementation. Details are not described herein again.

S802: A network device sends modulation and coding indication information to the terminal device, where the modulation and coding indication information indicates an MCS corresponding to each layer of data in P layers of data. Correspondingly, the terminal device receives the modulation and coding indication information. The MCS corresponding to each layer of data in the P layers of data is determined based on a ranking of a source contribution degree of the layer of data in source contribution degrees of the P layers of data and a mapping policy between a ranking of a source contribution degree and an MCS.

The P layers of data belong to the N layers of data, and the source contribution degree of each layer of data in the P layers of data indicates a deviation caused to the first data when the layer of data is missing, where P is less than or equal to N.

In this embodiment of this application, for the source contribution degree of each layer of data in the P layers of data, after determining a source contribution degree of each layer of data in the N layers of data in the first data, the terminal device may send the source contribution degree of the P layers of data in the N layers of data to the network device by using source feature information or the like.

After determining the source contribution degree of each layer of data in the N layers of data in the first data, the terminal device may send the source contribution degree of each layer of data in the P layers of data to the network device by using the source feature information.

In a possible implementation, P may be equal to N, to be specific, the source feature information sent by the terminal device to the network device may include the source contribution degree of each layer of data in the N layers of data.

In another possible implementation, P may alternatively be less than N, to be specific, the source feature information sent by the terminal device to the network device may include a source contribution degree of a part of the N layers of data. In an example, the terminal device may store a source contribution degree threshold predefined in a protocol or preconfigured by the network device. For the N layers of data, the terminal device sends, to the network device by using the source feature information, only the source contribution degree of each layer of data in the P layers of data that are in the N layers of data and that correspond to source contribution degrees greater than the source contribution degree threshold. Alternatively, the terminal device may store a reporting proportion S predefined in a protocol or preconfigured by the network device. For the N layers of data, the terminal device may send, to the network device by using the source feature information, only the source contribution degree of each layer of data in the P ($P=N*S$) layers of data that are in the N layers of data and whose source contribution degrees are larger.

It should be understood that the source contribution degree that is of each layer of data in the P layers of data and that is sent by the terminal device to the network device may be an unquantized original source contribution degree of each layer of data in the P layers of data, may be a quantized source contribution degree (for example, a source contribution degree obtained through quantization to an interval of 1 to 10 or a source contribution degree obtained through rounding calculation) of each layer of data in the P layers of data, or may be the ranking of the source contribution degree of each layer of data in the P layers of data in the source contribution degrees of the P layers of data (for example, a ranking that is of the source contribution degree of each layer of data in the P layers of data in the source contribution degrees of the P layers of data and that is determined in descending order of the source contribution degrees of the P layers of data).

In addition, to help the network device subsequently restore the N layers of data accurately from bitstreams that are from the terminal device, the source feature information sent by the terminal device to the network device may further include data length information (L) of each layer of data in the N layers of data in addition to the source contribution degree (C) of each layer of data in the P layers of data in the N layers of data.

Optionally, when a quality requirement parameter is set, the network device needs to restore only the P layers of data that meet a quality requirement. Therefore, the terminal device needs to send only data length information (L) of each layer of data in the P layers of data, and subsequently needs to transmit only information about the P layers of data, to reduce an amount of data to be transmitted.

For example, FIG. 9 is a diagram of the source feature information. The source feature information may include N+P+1 parameters, where a parameter bitmap (bitmap) includes N bits (bits) indicating the P layers of data that are in the N layers of data and whose source contribution degrees are sent. A bitmap 1011...1 indicates that the source feature information includes source contribution degrees of a total of P layers of data including a 1st layer of data (namely, a 1st piece of layered data), a 3rd layer of data (namely, a 3rd piece of layered data), a 4th layer of data (namely, a 4th piece of layered data), ..., and an Nth layer of data (namely, an Nth piece of layered data) in the N layers of data. N parameters $L_1$, $L_2$, ..., and $L_N$ represent data length information (for example, a quantity of bytes or a quantity of code blocks of a specific length (for example, a quantity of 512-bit code blocks)) of the 1st layer of data, the 2nd layer of data, ..., and the Nth layer of data, and P parameters $C_1$, $C_3$, ..., and $C_N$ represent source contribution degrees of the 1st layer of data, the 3rd layer of data, ..., and the Nth layer of data. For a layer whose source contribution degree is not reported, the source contribution degree related to the layer of data is not sent. For example, for the 2nd layer of data, only the data length information ($L_2$) is reported, and a source contribution degree ($C_2$) is not reported.

It can be understood that the network device may obtain, not only by using the source feature information reported by the terminal device but also in another manner, the source contribution degree of each layer of data in the P layers of data in the first data to be sent by the terminal device.

In an example, a plurality of pieces of data sent by the terminal device under scheduling performed by the network device in a period of time by using downlink control information (downlink control information, DCI) or the like are usually of a same type or similar types. For a plurality of pieces of data sent by the terminal device to the network device in a period of time (for example, one reporting periodicity), the terminal device may evenly divide the plurality of pieces of data into a same quantity of layers, and send, to the network device only before a 1st piece of data in the period of time is sent to the network device, a source contribution degree of each layer of data in P layers of data in the data. For subsequent data (for example, the first data) in the period of time, the network device may continue to use a configuration of the source contribution degree of each layer of data in the previous P layers of data.

Alternatively, if there is another terminal device in a same cell as the terminal device that is to send the first data, the network device may continue to use, as the source contribution degree of each layer of data in the P layers of data of the terminal device, a configuration of a source contribution degree that is of each layer of data in P layers of data and that is reported by the another terminal device.

For the determining of the MCS corresponding to each layer of data in the P layers of data, in a possible implementation, the network device may maintain one or more mapping tables between a ranking of a source contribution degree and an MCS. The terminal device and the network device may negotiate a to-be-used mapping table between a ranking of a source contribution degree and an MCS, or the network device determines a to-be-used mapping table between a ranking of a source contribution degree and an MCS. After obtaining the source contribution degree of each layer of data in the P layers of data in the first data to be sent by the terminal device, the network device may determine, based on the ranking (for example, in descending order) of the source contribution degree of each layer of data in the P layers of data in the source contribution degrees of the P layers of data, the MCS corresponding to each layer of data in the P layers of data.

For example, the used mapping table between a ranking of a source contribution degree and an MCS is enumerated in Table 1, and a ranking of a source contribution degree in each column corresponds to (or is mapped to) an MCS in the column. For example, a ranking 1 corresponds to $MCS_1$, a ranking 2 corresponds to $MCS_2$, ..., and a ranking Z corresponds to MCSz. A value of Z may be determined based on a maximum quantity of selectable layers supported by the network device and the terminal device. If P is 4, in the four layers of data, a layer of data whose source contribution degree is ranked 1 corresponds to $MCS_1$, a layer of data whose source contribution degree is ranked 2 corresponds to $MCS_2$, a layer of data whose source contribution degree is ranked 3 corresponds to $MCS_3$, and a layer of data whose source contribution degree is ranked 4 corresponds to $MCS_4$.

Table 1

| 1 | 2 | 3 | ... | Z |
|---|---|---|---|---|
| $MCS_1$ | $MCS_2$ | $MCS_3$ | ... | $MCS_Z$ |

In another possible implementation, the network device may alternatively maintain one or more mapping tables between channel state information, a ranking of a source contribution degree, and an MCS. The terminal device and the network device may negotiate a to-be-used mapping table between channel state information, a ranking of a source contribution degree, and an MCS, or the network device determines a to-be-used mapping table between channel state information, a ranking of a source contribution degree, and an MCS. After obtaining the source contribution degree of each layer of data in the P layers of data in the first data to be sent by the terminal device, the network device may determine, based on channel state information between the network device and the terminal device and the ranking of the source contribution degree of each layer of data in the P layers of data in the source contribution degrees of the P layers of data, the MCS corresponding to each layer of data in the P layers of data. The channel state information may be one or more of a signal-to-noise ratio (signal-to-noise ratio, SNR), reference signal received quality (reference signal received quality, RSRQ), a bit error ratio (bit error ratio, BER), or the like.

For example, the channel state information is the SNR. The used mapping table between channel state information, a ranking of a source contribution degree, and an MCS is enumerated in Table 2. An MCS may be uniquely determined based on a column to which the ranking of the source contribution degree belongs and an SNR interval to which the SNR between the network device and the terminal device belongs. SNR interval$_1$, SNR interval$_2$, SNR interval$_3$, ..., and SNR interval$_D$ do not overlap. For example, if the SNR between the network device and the terminal device belongs to SNR interval$_1$, and a ranking of a source contribution degree of a specific layer of data in the source contribution degrees of the P layers of data is 1, an MCS corresponding to the layer of data may be determined as $MCS_{1,1}$. If the SNR between the network device and the terminal device belongs to SNR interval$_1$, and a ranking of a source contribution degree of a specific layer of data in the source contribution degrees of the P layers of data is 2, an MCS corresponding to the layer of data may be determined as $MCS_{1,2}$.

Table 2

| | | Ranking of a source contribution degree | | | | |
|---|---|---|---|---|---|---|
| | | 1 | 2 | 3 | ... | Z |
| Channel state interval | SNR interval$_2$, | MCS$_{1,1}$ | MCS$_{1,2}$ | MCS$_{1,3}$ | ... | MCS$_{1,Z}$ |
| | SNR interval$_2$, | MCS$_{2,1}$ | MCS$_{2,2}$ | MCS$_{2,3}$ | ... | MCS$_{2,Z}$ |
| | SNR interval$_3$ | MCS$_{3,1}$ | MCS$_{3,2}$ | MCS$_{3,3}$ | ... | MCS$_{3,Z}$ |
| | ... | ... | ... | ... | ... | ... |
| | SNR interval$_D$ | MCS$_{D,1}$ | MCS$_{D,2}$ | MCS$_{D,3}$ | ... | MCS$_{D,Z}$ |

Using D=4 and Z=8 as an example, an MCS to which the channel state information and the ranking of the source contribution degree are mapped may be specifically enumerated in Table 3. Quadrature phase shift keying (quadrature phase shift keying, QPSK) represents a modulation scheme in which a modulation order is 4 (in other words, a quantity of modulation bits is log2(4)=2), 16 quadrature amplitude modulation (quadrature amplitude modulation, QAM) represents a modulation scheme in which a modulation order is 16 (in other words, a quantity of modulation bits is log2(16)=4), and 32QAM represents a modulation scheme in which a modulation order is 32 (in other words, a quantity of modulation bits is log2(32)=5). Refer to Table 4. If the SNR between the network device and the terminal device belongs to SNR interval$_1$, and a ranking of a source contribution degree of a layer of data in the source contribution degrees of the P layers of data is 1, an MCS (namely, MCS$_{1,1}$) corresponding to the layer of data is a modulation and coding scheme in which a rate (Rate) is 1/2 and a modulation order is 4; if the SNR between the network device and the terminal device belongs to SNR interval$_1$, and a ranking of a source contribution degree of a layer of data in the source contribution degrees of the P layers of data is 2, an MCS (namely, MCS$_{1,2}$) corresponding to the layer of data is a modulation and coding scheme in which a rate is 17/32 and a modulation order is 4; ...; and if the SNR between the network device and the terminal device belongs to SNR interval$_4$, and a ranking of a source contribution degree of a layer of data in the source contribution degrees of the P layers of data is 8, an MCS (namely, MCS$_{4,8}$) corresponding to the layer of data is a modulation and coding scheme in which a rate is 25/32 and a modulation order is 32.

Table 3

| | 1 | 2 | 3 | 4 | 5 | 6 | 7 | 8 |
|---|---|---|---|---|---|---|---|---|
| SNR interval$_1$ | 1/2Rate, QPSK | 17/32Rate, QPSK | 9/16Rate, QPSK | 19/32Rate, QPSK | 5/8Rate, QPSK | 21/32Rate, QPSK | 11/16Rate, QPSK | 23/32Rate, QPSK |
| SNR interval$_2$ | 1/2Rate, 16QAM | 17/32Rate, 16QAM | 9/16Rate, 16QAM | 19/32Rate, 16QAM | 5/8Rate, 16QAM | 21/32Rate, 16QAM | 11/16Rate, 16QAM | 23/32Rate, 16QAM |
| SNR interval$_3$ | 1/2Rate, 32QAM | 17/32Rate, 32QAM | 9/16Rate, 32QAM | 19/32Rate, 32QAM | 5/8Rate, 32QAM | 21/32Rate, 32QAM | 11/16Rate, 32QAM | 23/32Rate, 32QAM |
| SNR interval$_4$ | 7/8Rate, QPSK | 3/4Rate, 16QAM | 25/32Rate, 16QAM | 13/16Rate, 16QAM | 27/32Rate, 16QAM | 7/8Rate, 16QAM | 3/4Rate, 32QAM | 25/32Rate, 32QAM |

In another possible implementation, the network device may alternatively obtain a corresponding MCS=(Rate, Mod) based on a mapping relationship between channel state information and an MCS and the channel state information between the network device and the network device, where Mod represents a quantity of modulation bits (namely, a quantity of bits that can be represented by each modulation symbol). For example, quantities of bits that can be represented by each symbol modulation symbol in symbol types such as QPSK, 8QAM, 16QAM, and 32QAM are respectively 2, 3, 4, and 5, and modulation orders corresponding to these symbol types are respectively 4, 8, 16, and 32. Rate represents a preset rate.

Same modulation Mod, namely, a same modulation order, may be for all layers of data, and the layers of data are distinguished only in terms of the rate (Rate).

$$\mathrm{Rate}_n = L_n \Big/ \left( \frac{\sum_{i=1}^{P} L_i}{\mathrm{Rate}} \times \frac{C_n^{\alpha}}{\sum_{i=1}^{P} C_i^{\alpha}} \right)$$

A rate of an $n^{th}$ layer of data in the P layers of data is $\mathrm{Rate}_n$, $C_n^{\alpha}$ is a source contribution degree of the $n^{th}$ layer of data in the P layers of data to the power of $\alpha$, $L_n$ is a data length of the $n^{th}$ layer of data in the P layers of data, and $\alpha$ is an adjustment factor, where $\alpha > 0$, and Rate represents the preset rate. To be specific, a lower rate is allocated to a layer of data with a larger source contribution degree, to perform key protection. A smaller value of $\alpha$ indicates a smaller rate difference between (closer protection degrees of) the layers. A candidate value set A={ $\alpha_1$, $\alpha_2$, ..., $\alpha_x$} may be first determined in advance for $\alpha$. The network device may select the value of $\alpha$ from the set A, and may further configure the selected value of $\alpha$ for the terminal device by using RRC signaling, so that the terminal device calculates a rate of each layer of data.

It should be understood that, in this embodiment of this application, MCSs corresponding to any two layers of data in the determined P layers of data meet: A rate of an MCS corresponding to a layer A of data is less than or equal to a rate of an MCS corresponding to a layer B of data; and/or a modulation order of the MCS corresponding to the layer A of data is less than or equal to a modulation order of the MCS corresponding to the layer B of data, where the layer A of data is a layer of data corresponding to a larger source contribution degree in the two layers of data, and the layer B of data is a layer of data corresponding to a smaller source contribution degree in the two layers of data. In other words, when the foregoing mapping table between a ranking of a source contribution and an MCS, the foregoing mapping table between channel state information, a ranking of a source contribution, and an MCS, or the like meets a same channel state (or when a channel state is not considered), a modulation order and/or a rate of a corresponding MCS increase/increases as a ranking of a source contribution degree of a layer of data in descending order increases, so that compared with a layer of data corresponding to a smaller source contribution degree, a layer of data corresponding to a larger source contribution degree may use a lower rate and/or modulation order, to achieve stronger transmission robustness and ensure transmission performance.

S803: The terminal device separately performs coding and modulation on the P layers of data based on the MCS corresponding to each layer of data in the P layers of data, to obtain P bitstreams.

S804: The terminal device sends N bitstreams to the network device. Correspondingly, the network device receives the N bitstreams, where the N bitstreams include the P bitstreams and N-P bitstreams corresponding to N-P layers of data other than the P layers of data in the N layers of data.

After determining the MCS corresponding to each layer of data in the P layers of data, the network device may send, to the terminal device, the modulation and coding indication information indicating the MCS corresponding to each layer of data in the P layers of data, to indicate the MCS for each layer of data in the P layers of data of the terminal device. After receiving the MCS corresponding to each layer of data in the P layers of data, the terminal device may separately perform coding and modulation on the P layers of data based on the MCS (for example, the rate or the modulation order) corresponding to each layer of data in the P layers of data, to obtain the P bitstreams.

For the N-P layers of data other than the P layers of data in the N layers of data, MCSs for the N-P layers of data may be configured on or agreed on between the network device and the terminal device in advance through predefinition in a protocol, indication by the network device, or the like. For example, an MCS for the N-P layers of data may be preconfigured, or it may be agreed in advance that an MCS corresponding to a 1st layer of data or an MCS corresponding to a $P^{th}$ layer of data in the P layers of data is for the N-P layers of data. The terminal device may further separately perform coding and modulation on the N-P layers of data based on the MCS for the N-P layers of data, to obtain the N-P bitstreams.

After obtaining a total of N bitstreams including the P bitstreams corresponding to the P layers of data in the N layers of data and the N-P bitstreams corresponding to the N-P layers of data other than the P layers of data in the N layers of data, the terminal device may send the N bitstreams to the network device, for example, on an uplink shared channel. Correspondingly, the network device receives the N bitstreams from the terminal device.

S805: The network device performs demodulation and decoding on the N bitstreams to obtain the N layers of data.

S806: The network device reconstructs the first data from the N layers of data.

After receiving the N bitstreams, the network device may perform, based on the MCS corresponding to each layer of data in the P layers of data, demodulation and decoding on the P bitstreams corresponding to the P layers of data in the N bitstreams, to obtain the P layers of data; and may separately perform, based on the MCS for the N-P layers of data, demodulation and decoding on the N-P bitstreams corresponding to the N-P layers of data other than the P layers of data, to obtain the N-P layers of data. After obtaining the P layers of data and the N-P layers of data, the network device may reconstruct the first data from the N layers of data. For example, the N layers of data are concatenated based on a location of each layer of data in the N layers of data (or a ranking of the layer in the N layers of data), to obtain the first data.

It should be understood that, if the terminal device concatenates the N bitstreams together for sending, the network device may further determine, based on the data length information and the MCS that correspond to each layer of data in the N layers of data, a bitstream size corresponding to each layer of data, to determine a switching point of each bitstream, and therefore perform demodulation and decoding on the N bitstreams.

In the foregoing method, the network device may configure a transmission resource (for example, a transport block (transport block, TB)) for the terminal device based on an optional minimum bitstream and an optional minimum modulation order (or a minimum quantity of modulation bits), so that the terminal device has sufficient resources to send the N bitstreams. In some implementations, to improve resource utilization, the network device may further determine, based on the data length information of each layer of data in the N layers of data, the MCS corresponding to each layer of data in the P layers of data in the N layers of data, and the MCS corresponding to the N-P layers of data, sizes of the N bitstreams corresponding to the N layers of data; and determine, based on the sizes of the N bitstreams and a quantity O of transport streams for transmitting the N layers of data, M TBs for transmitting the N layers of data (namely, the N bitstreams corresponding to the N layers of data), where M and O are integers greater than or equal to 1.

Specifically, after obtaining $MCS_n = (Rate_n, Mod_n)$ for each layer, the network device may estimate a quantity of transmission resources (namely, a quantity of symbols) for each layer, where n represents the $n^{th}$ layer of data in the N layers of data, and $MCS_n$, $Rate_n$, and $Mod_n$ represent an MCS, the rate, and a quantity of modulation bits that correspond to the $n^{th}$ layer of data in the N layers of data.

$$Res_n = \lceil (L_n + \Delta L_n)/(Rate_n \times Mod_n) \rceil$$

$\Delta L_n$ represents a bit length increase value caused by cyclic redundancy check (cyclic redundancy check, CRC), zero padding, and the like. When a CRC length $L_{crc}$ and a code block (code block, CB) bit size $K_{cb,n}$ (where different layers may have different $L_{crc}$ and $K_{cb,n}$) are given, $\Delta L_n = N_{cb} L_{crc} + (N_{cb} K_{cb,n} - L_n)$ may be calculated, where $N_{cb} = \lceil L_n/K_{cb,n} \rceil$ and $\lceil \cdot \rceil$ represents a ceiling operation. $Mod_n$ may be determined based on a modulation order. For example, the modulation orders in QPSK, 8QAM, 16QAM, 32QAM, and the like are respectively 4, 8, 16, and 32, and corresponding quantities of bits that can be represented by each modulation symbol are respectively 2, 3, 4, and 5. A CB size of each layer of data in the N layers of data may be predefined in a protocol or configured by the network device.

A total quantity of transmission resources (namely, a size of the N bitstreams) is $Res = \sum_{n=1}^{N} Res_n$. The network device may estimate a symbol length $L_{tb}$ and a quantity M of needed TBs based on a quantity $Res_{avi}$ of currently available resources, namely, a supported maximum TB (where the maximum TB may be determined based on a product of a supported quantity of consecutive slots (slots), a quantity of RBs in each slot, a quantity of symbols in each RB, and a quantity of transport layers (layers)).

$$L_{tb} = \min(Res, Res_{avi}), \text{ and } M = \lceil Res/L_{tb} \rceil.$$

After determining the M TBs, the network device indicates the M TBs to the terminal device by using resource configuration information. For example, the quantity and the symbol length of the M TBs are indicated to the terminal device.

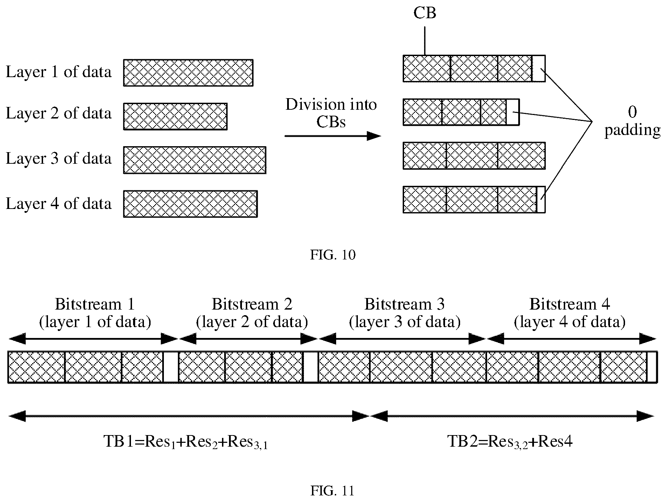

Using N=4 as an example, FIG. 10 is a diagram of division into CBs. The terminal device may divide each layer of data into one or more CBs based on the CB size of each layer, perform a 0 padding (padding) operation on a CB that is not fully filled, perform, based on the MCS corresponding to each layer, coding and modulation on the CB obtained through division, to obtain a bitstream corresponding to each layer, and then fill, into the M TBs based on the configured M (for example, two) TBs, the bitstream of each layer obtained through the coding and modulation. After four bitstreams corresponding to four layers of data (a layer 1 of data to a layer 4 of data) shown in FIG. 5 are filled into the two TBs (for example, a TB 1 and a TB 2), a TB combination shown in FIG. 11 may be obtained, where the TB 1 includes a resource $(Res_1)$ for a bitstream 1, a resource $(Res_2)$ for a bitstream 2, and a part $(Res_{3,1})$ of a resource for a bitstream 3, and the TB 2 includes a remaining part $(Res_{3,2})$ of the resource for the bitstream 3 and a resource $(Res_4)$ for a bitstream 4.

Optionally, the network device sends actually-sendable-layer indication information to the terminal device, where the actually-sendable-layer indication information indicates N' layers of data that are actually sendable, and N' is less than or equal to N. Correspondingly, the terminal device separately performs coding and modulation on the N' layers of data to obtain N' bitstreams, and sends the N' bitstreams to a second apparatus. Specifically, the network device schedules a transmission resource in advance, to be specific, limits a maximum value $Res_{max}$ of the transmission resource, and a maximum quantity N' of actually sendable layers is determined based on $Res_{max}$. If N'<N, the terminal device first sends the N' layers of data, and a resource may be further requested or allocated to send remaining data, or next resource scheduling may be waited for to send remaining data. The network device may determine, based on $Res_{max}$, the maximum quantity N' of actually sendable layers, and the actually-sendable-layer indication information is N'-layers indication information. Alternatively, the actually-sendable-layer indication information is $Res_{max}$, and a first apparatus determines, based on $Res_{max}$, the maximum quantity N' of actually sendable layers.

Specifically, the determining, based on $Res_{max}$, the maximum quantity N' of actually sendable layers includes:

performing sorting in descending order of the source contribution degrees of the layers, where $N' = \arg\max_{K} K$ , s. t. $\sum_{m=1}^{K} Res_m \leq Res_{max}$ , and $K \leq N$; or if the quality requirement parameter is set, determining a candidate set $\{I_1, ..., I_Q\}$ based on the quality requirement, where $N' = \arg\max_{K} K$ s.t. $\sum_{m=1}^{K} Res_m \leq Res_{max}$ , and $K \leq Q$.

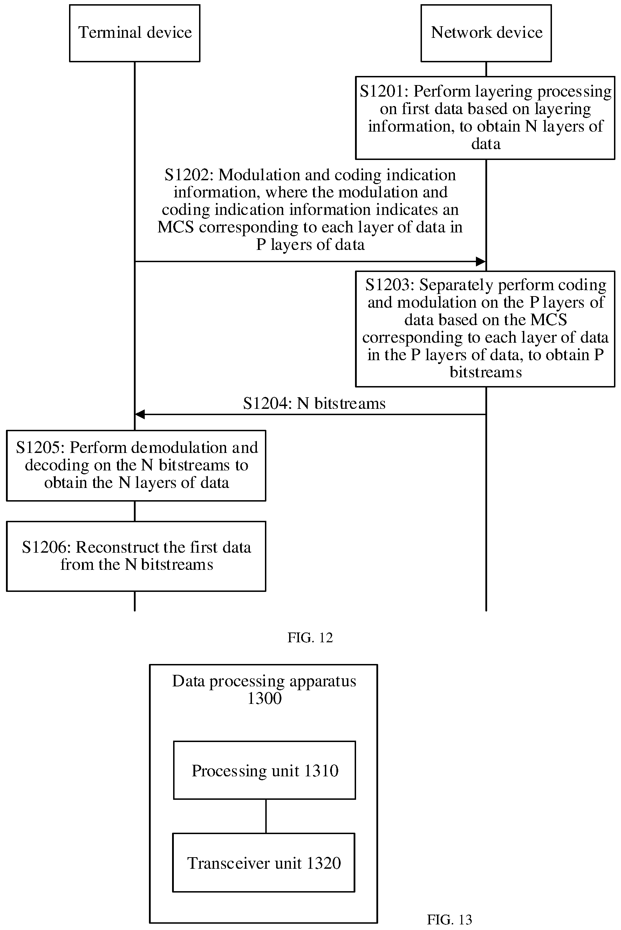

The foregoing describes UEP-based layered transmission of the to-be-transmitted first data mainly from a perspective of uplink data transmission. It can be understood that UEP-based layered transmission may also be performed for downlink data transmission. FIG. 12 is a diagram of still another communication method according to an embodiment of this application. The method includes the following steps.

S1201: A network device performs layering processing on first data based on layering information, to obtain N layers of data, where N is an integer greater than or equal to 2.

S1202: The network device sends modulation and coding indication information to a terminal device, where the modulation and coding indication information indicates an MCS corresponding to each layer of data in the N layers of data. Correspondingly, the terminal device receives the modulation and coding indication information from the network device.

The MCS corresponding to each layer of data in the N layers of data is determined based on a ranking of a source contribution degree of each layer of data in the N layers of data in source contribution degrees of the N layers of data and a mapping policy between a ranking of a source contribution degree and an MCS. The source contribution degree of each layer of data in the N layers of data indicates a deviation caused to the first data when the layer of data is missing.

S1203: The network device separately performs coding and modulation on the N layers of data based on the MCS corresponding to each layer of data in the N layers of data, to obtain N bitstreams.

S1204: The network device sends the N bitstreams to the terminal device. Correspondingly, the terminal device receives the N bitstreams.

S1205: The terminal device performs demodulation and decoding on the N bitstreams to obtain the N layers of data.

S1206: The terminal device reconstructs the first data from the N layers of data.

Implementation principles of steps S1201 to S1206 are similar to implementation principles of steps S801 to S806. For specific implementations, refer to descriptions in S801 to S806. Details are not described again.

It should be understood that the communication method provided in this application is described above by using an example in which the first apparatus is the terminal device, the second apparatus is the network device, and the first data is communicated between the terminal device and the network device. It can be understood that, in some implementations, the first apparatus is a terminal device, and the second apparatus may be a terminal device different from the first apparatus. The communication method provided in embodiments of this application may be further applied to transmission of first data between the terminal devices.

It can be understood that, to implement functions in the foregoing embodiments, the first apparatus (for example, the terminal device) and the second apparatus (for example, the network device) include corresponding hardware structures and/or software modules for performing the functions. A person skilled in the art should be easily aware that, with reference to the units and method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

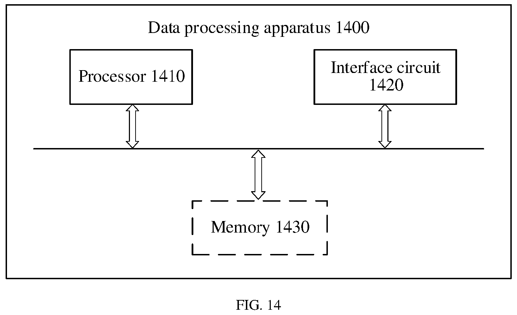

FIG. 13 and FIG. 14 each are a diagram of a structure of a possible data processing apparatus according to an embodiment of this application. These data processing apparatuses may be configured to implement functions of the first apparatus (for example, the terminal device) and the second apparatus (for example, the network device) in the method embodiment shown in FIG. 2, FIG. 7, FIG. 8, or FIG. 12, and therefore can also implement beneficial effects achieved in the foregoing method embodiment. In a possible implementation, the data processing apparatus may be a terminal device or a network device, or may be a module (for example, a chip) used in the terminal device or the network device.

As shown in FIG. 13, the data processing apparatus 1300 includes a processing unit 1310 and an interface unit 1320, where the interface unit 1320 may alternatively be a transceiver unit or an input/output interface. The data processing apparatus 1300 may be configured to implement the functions of the first apparatus (for example, the terminal device) and the second apparatus (for example, the network device) in the method embodiment shown in FIG. 2, FIG. 7, FIG. 8, or FIG. 12.

As shown in FIG. 14, this application further provides a data processing apparatus 1400, including a processor 1410 and an interface circuit 1420. The processor 1410 and the interface circuit 1420 are coupled to each other. It can be understood that the interface circuit 1420 may be a transceiver, an input/output interface, an input interface, an output interface, a communication interface, or the like. Optionally, the data processing apparatus 1400 may further include a memory 1430, configured to: store instructions to be executed by the processor 1410, store input data needed by the processor 1410 to run instructions, or store data generated after the processor 1410 runs instructions. Optionally, the memory 1430 may be further integrated with the processor 1410.

When the data processing apparatus 1400 is configured to implement the method shown in FIG. 2, FIG. 7, FIG. 8, or FIG. 12, the processor 1410 may be configured to implement a function of the processing unit 1310, and the interface circuit 1420 may be configured to implement a function of the interface unit 1320.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented by hardware, or may be implemented by the processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or transmitted from a computer-readable storage medium to another computer-readable storage medium. For example, the computer program or instructions may be transmitted from a network device, terminal, computer, server, or data center to another network device, terminal, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that the term "for example" in embodiments of this application represents giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It can be understood that various numbers in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1.  A data processing method, comprising:

    performing, by a first apparatus, layering processing on first data based on layering information to obtain N layers of data, wherein N is an integer greater than or equal to 2, and the layering processing comprises data grouping and bit layering;
    separately performing coding and modulation on the N layers of data to obtain N bitstreams; and
    sending the N bitstreams to a second apparatus.

2.  The method according to claim 1, wherein the layering information comprises a data unit size and a total quantity of bit planes;

    correspondingly, the data grouping comprises: grouping the first data based on the data unit size, to obtain a plurality of groups of data; and
    correspondingly, the bit layering comprises: binarizing each piece of data in each of the groups of data into a one-dimensional bit vector, wherein a vector length is the total quantity of bit planes; arranging the one-dimensional bit vectors in a second dimension to form a bit matrix; and dividing the bit matrix into a plurality of bit groups, wherein N bit groups are obtained in total from the plurality of groups of data, and correspond to the N layers of data.

3.  The method according to claim 2, wherein the first data is multi-dimensional matrix data, and the data grouping comprises:

    segmenting the first data to obtain a plurality of data segments, wherein the data unit size is a size of the data segment;
    processing each of the data segments into a one-dimensional vector;
    arranging the one-dimensional vectors in a second dimension to form a two-dimensional matrix; and
    dividing the two-dimensional matrix into the plurality of groups of data.

4.  The method according to claim 3, wherein the data grouping further comprises:
    grouping the data segments in one or more dimensions to obtain a plurality of groups of data segments.

5.  The method according to claim 2, wherein the data grouping comprises:

    representing the first data in a form of an X-layer K-ary tree, wherein X and K are integers greater than 1, and the data unit size is K, wherein
    an $x^{th}$ layer of the K-ary tree corresponds to an $x^{th}$ time of grouping, and each of the groups of data corresponds to information about all subnodes of one or more nodes of the $x^{th}$ layer, wherein x=1, 2, ..., or X.

6.  The method according to any one of claims 2 to 5, wherein the layering information further comprises a data grouping parameter; and

    if the data grouping is uneven division, the data grouping parameter comprises a quantity T of data groups and a quantity $d_n$ of pieces of data comprised in each of the groups of data, wherein n=1, 2, ..., or T; or
    if the data grouping is even division, the data grouping parameter comprises a quantity T of data groups or a quantity d of pieces of data comprised in each of the groups of data.

7.  The method according to any one of claims 2 to 6, wherein the layering information further comprises a bit layering parameter; and

    if the bit layering is uneven division, the bit layering parameter comprises a quantity $m_n$ of bit layers comprised in each of the groups of data and a quantity $b_{n,i}$ of bit planes comprised in each of the bit groups, wherein n=1, 2, ..., or T, and i=1, 2, ..., or $m_n$;
    if the bit layering is uneven division and division manners in all the groups of data are the same, the bit layering parameter comprises a quantity m of bit layers in each of the groups of data and a quantity $b_i$ of bit planes comprised in each of the bit groups, wherein i=1, 2, ..., or m;
    if the bit layering is even division, the bit layering parameter comprises a quantity $m_n$ of bit layers comprised in each of the groups of data or a quantity $b_n$ of bit planes comprised in each of the bit groups, wherein n=1, 2, ..., or T;

or

if the bit layering is even division and division manners in all the groups of data are the same, the bit layering parameter comprises a quantity m of bit layers in each of the groups of data or a quantity b of bit planes comprised in each of the bit groups.

8.   The method according to any one of claims 1 to 7, wherein the first data is in a complex form, and the method further comprises: representing the first data as second data and third data, separately performing the same layering processing and the same coding and modulation on the second data and the third data to obtain a second sequence and a third sequence, and correspondingly concatenating the second sequence and the third sequence to obtain the N bitstreams, wherein the second data and the third data are respectively amplitude data and phase data, or are respectively real-part data and imaginary-part data.

9.   The method according to any one of claims 1 to 8, wherein the layering information further comprises a quality requirement parameter; and correspondingly, the layering processing further comprises: selecting Q layers of data from the N layers of data based on the quality requirement parameter.

10.   The method according to claim 9, wherein the selecting Q layers of data from the N layers of data based on the quality requirement parameter comprises: sorting the N layers of data in descending order of source contribution degrees, and selecting first Q layers of data, wherein Q is a minimum value that enables the selected layer of data to meet the quality requirement parameter, and the source contribution degree indicates a deviation caused to the first data when the layer of data is missing.

11.   The method according to any one of claims 1 to 10, wherein the method further comprises:

receiving modulation and coding indication information from the second apparatus, wherein the modulation and coding indication information indicates a modulation and coding scheme MCS corresponding to each layer of data in P layers of data, the P layers of data belong to the N layers of data, and the MCS corresponding to each layer of data in the P layers of data is determined based on a ranking of a source contribution degree of the layer of data in source contribution degrees of the P layers of data and a mapping policy between a ranking of a source contribution degree and an MCS, wherein the source contribution degree of each layer of data in the P layers of data indicates a deviation caused to the first data when the layer of data is missing, and P is less than or equal to N; separately performing coding and modulation on the P layers of data based on the MCS corresponding to each layer of data in the P layers of data, to obtain P bitstreams; and sending the N bitstreams to the second apparatus, wherein the N bitstreams comprise the P bitstreams and N-P bitstreams corresponding to N-P layers of data other than the P layers of data in the N layers of data.

12.   The method according to any one of claims 1 to 11, wherein the method further comprises: receiving actually-sendable-layer indication information from the second apparatus, wherein the actually-sendable-layer indication information indicates N' layers of data that are actually sendable, and N' is less than or equal to N.

13.   The method according to any one of claims 1 to 12, wherein the layering information is configured by the first apparatus, or is received by the first apparatus from the second apparatus.

14.   A data processing method, comprising:

performing, by a second apparatus, layering processing on first data based on layering information to obtain N layers of data, wherein N is an integer greater than or equal to 2, and the layering processing comprises data grouping and bit layering; separately performing coding and modulation on the N layers of data to obtain N bitstreams; and sending the N bitstreams to a first apparatus.

15.   The method according to claim 14, wherein the layering information comprises a data unit size and a total quantity of bit planes;

correspondingly, the data grouping comprises: grouping the first data based on the data unit size, to obtain a plurality of groups of data; and correspondingly, the bit layering comprises: binarizing each piece of data in each of the groups of data into a one-dimensional bit vector, wherein a vector length is the total quantity of bit planes; arranging the one-dimensional bit vectors in a second dimension to form a bit matrix; and dividing the bit matrix into a plurality of bit groups, wherein N bit groups are obtained in total from the plurality of groups of data, and correspond to the N layers of data.

16. The method according to claim 15, wherein the first data is multi-dimensional matrix data, and the data grouping comprises:

segmenting the first data to obtain a plurality of data segments, wherein the data unit size is a size of the data segment;
processing each of the data segments into a one-dimensional vector;
arranging the one-dimensional vectors in a second dimension to form a two-dimensional matrix; and
dividing the two-dimensional matrix into the plurality of groups of data.

17. The method according to claim 15 or 16, wherein the layering information further comprises a data grouping parameter and a bit layering parameter;

if the data grouping is uneven division, the data grouping parameter comprises a quantity T of data groups and a quantity $d_n$ of pieces of data comprised in each of the groups of data, wherein n=1, 2, ..., or T; or
if the data grouping is even division, the data grouping parameter comprises a quantity T of data groups or a quantity d of pieces of data comprised in each of the groups of data; and
if the bit layering is uneven division, the bit layering parameter comprises a quantity $m_n$ of bit layers comprised in each of the groups of data and a quantity $b_{n,i}$ of bit planes comprised in each of the bit groups, wherein n=1, 2, ..., or T, and i=1, 2, ..., or $m_n$;
if the bit layering is uneven division and division manners in all the groups of data are the same, the bit layering parameter comprises a quantity m of bit layers in each of the groups of data and a quantity $b_i$ of bit planes comprised in each of the bit groups, wherein i=1, 2, ..., or m;
if the bit layering is even division, the bit layering parameter comprises a quantity $m_n$ of bit layers comprised in each of the groups of data or a quantity $b_n$ of bit planes comprised in each of the bit groups, wherein n=1, 2, ..., or T; or
if the bit layering is even division and division manners in all the groups of data are the same, the bit layering parameter comprises a quantity m of bit layers in each of the groups of data or a quantity b of bit planes comprised in each of the bit groups.

18. The method according to any one of claims 14 to 17, wherein the layering information further comprises a quality requirement parameter; and correspondingly, the layering processing further comprises: selecting Q layers of data from the N layers of data based on the quality requirement parameter.

19. The method according to any one of claims 14 to 18, wherein the layering information is configured by the second apparatus.

20. A data processing apparatus, comprising an interface unit and a processing unit, wherein

the processing unit is configured to: perform layering processing on first data based on layering information to obtain N layers of data, wherein N is an integer greater than or equal to 2, and the layering processing comprises data grouping and bit layering; and separately perform coding and modulation on the N layers of data to obtain N bitstreams; and
the interface unit is configured to send the N bitstreams to a second apparatus.

21. The apparatus according to claim 20, wherein the layering information comprises a data unit size and a total quantity of bit planes;

correspondingly, the data grouping comprises: grouping the first data based on the data unit size, to obtain a plurality of groups of data; and
correspondingly, the bit layering comprises: binarizing each piece of data in each of the groups of data into a one-dimensional bit vector, wherein a vector length is the total quantity of bit planes; arranging the one-dimensional bit vectors in a second dimension to form a bit matrix; and dividing the bit matrix into a plurality of bit groups, wherein N bit groups are obtained in total from the plurality of groups of data, and correspond to the N layers of data.

22. The apparatus according to claim 21, wherein the first data is multi-dimensional matrix data, and the data grouping comprises:

segmenting the first data to obtain a plurality of data segments, wherein the data unit size is a size of the data segment;
processing each of the data segments into a one-dimensional vector;
arranging the one-dimensional vectors in a second dimension to form a two-dimensional matrix; and
dividing the two-dimensional matrix into the plurality of groups of data.

23. The apparatus according to claim 22, wherein the data grouping further comprises:
grouping the data segments in one or more dimensions to obtain a plurality of groups of data segments.

24. The apparatus according to claim 21, wherein the data grouping comprises:

representing the first data in a form of an X-layer K-ary tree, wherein X and K are integers greater than 1, and the data unit size is K, wherein
an $x^{th}$ layer of the K-ary tree corresponds to an $x^{th}$ time of grouping, and each of the groups of data corresponds to information about all subnodes of one or more nodes of the $x^{th}$ layer, wherein x=1, 2, ..., or X.

25. The apparatus according to any one of claims 21 to 24, wherein the layering information further comprises a data grouping parameter; and

if the data grouping is uneven division, the data grouping parameter comprises a quantity T of data groups and a quantity $d_n$ of pieces of data comprised in each of the groups of data, wherein n=1, 2, ..., or T; or
if the data grouping is even division, the data grouping parameter comprises a quantity T of data groups or a quantity d of pieces of data comprised in each of the groups of data.

26. The apparatus according to any one of claims 21 to 25, wherein the layering information further comprises a bit layering parameter; and

if the bit layering is uneven division, the bit layering parameter comprises a quantity $m_n$ of bit layers comprised in each of the groups of data and a quantity $b_{n,i}$ of bit planes comprised in each of the bit groups, wherein n=1, 2, ..., or T, and i=1, 2, ..., or $m_n$;
if the bit layering is uneven division and division manners in all the groups of data are the same, the bit layering parameter comprises a quantity m of bit layers in each of the groups of data and a quantity $b_i$ of bit planes comprised in each of the bit groups, wherein i=1, 2, ..., or m;
if the bit layering is even division, the bit layering parameter comprises a quantity $m_n$ of bit layers comprised in each of the groups of data or a quantity $b_n$ of bit planes comprised in each of the bit groups, wherein n=1, 2, ..., or T; or
if the bit layering is even division and division manners in all the groups of data are the same, the bit layering parameter comprises a quantity m of bit layers in each of the groups of data or a quantity b of bit planes comprised in each of the bit groups.

27. The apparatus according to any one of claims 20 to 26, wherein the first data is in a complex form, and the processing unit is further configured to: represent the first data as second data and third data, separately perform the same layering processing and the same coding and modulation on the second data and the third data to obtain a second sequence and a third sequence, and correspondingly concatenate the second sequence and the third sequence to obtain the N bitstreams, wherein the second data and the third data are respectively amplitude data and phase data, or are respectively real-part data and imaginary-part data.

28. The apparatus according to any one of claims 20 to 27, wherein the layering information further comprises a quality requirement parameter; and correspondingly, the layering processing further comprises: selecting Q layers of data from the N layers of data based on the quality requirement parameter.

29. The apparatus according to claim 28, wherein the selecting Q layers of data from the N layers of data based on the quality requirement parameter comprises: sorting the N layers of data in descending order of source contribution degrees, and selecting first Q layers of data, wherein Q is a minimum value that enables the selected layer of data to meet the quality requirement parameter, and the source contribution degree indicates a deviation caused to the first data when the layer of data is missing.

**30.** The apparatus according to any one of claims 20 to 29, wherein

the interface unit is further configured to receive modulation and coding indication information from the second apparatus, wherein the modulation and coding indication information indicates a modulation and coding scheme MCS corresponding to each layer of data in P layers of data, the P layers of data belong to the N layers of data, and the MCS corresponding to each layer of data in the P layers of data is determined based on a ranking of a source contribution degree of the layer of data in source contribution degrees of the P layers of data and a mapping policy between a ranking of a source contribution degree and an MCS, wherein the source contribution degree of each layer of data in the P layers of data indicates a deviation caused to the first data when the layer of data is missing, and P is less than or equal to N;

the processing unit is further configured to separately perform coding and modulation on the P layers of data based on the MCS corresponding to each layer of data in the P layers of data, to obtain P bitstreams; and

the interface unit is further configured to send the N bitstreams to the second apparatus, wherein the N bitstreams comprise the P bitstreams and N-P bitstreams corresponding to N-P layers of data other than the P layers of data in the N layers of data.

**31.** The apparatus according to any one of claims 20 to 30, wherein the interface unit is further configured to receive actually-sendable-layer indication information from the second apparatus, wherein the actually-sendable-layer indication information indicates N' layers of data that are actually sendable, and N' is less than or equal to N.

**32.** The apparatus according to any one of claims 20 to 31, wherein the layering information is configured by the processing unit, or is received by the interface unit from the second apparatus.

**33.** A data processing apparatus, comprising an interface unit and a processing unit, wherein

the processing unit is configured to: perform layering processing on first data based on layering information to obtain N layers of data, wherein N is an integer greater than or equal to 2, and the layering processing comprises data grouping and bit layering; and separately perform coding and modulation on the N layers of data to obtain N bitstreams; and

the interface unit is configured to send the N bitstreams to a first apparatus.

**34.** The apparatus according to claim 33, wherein the layering information comprises a data unit size and a total quantity of bit planes;

correspondingly, the data grouping comprises: grouping the first data based on the data unit size, to obtain a plurality of groups of data; and

correspondingly, the bit layering comprises: binarizing each piece of data in each of the groups of data into a one-dimensional bit vector, wherein a vector length is the total quantity of bit planes; arranging the one-dimensional bit vectors in a second dimension to form a bit matrix; and dividing the bit matrix into a plurality of bit groups, wherein N bit groups are obtained in total from the plurality of groups of data, and correspond to the N layers of data.

**35.** The apparatus according to claim 34, wherein the first data is multi-dimensional matrix data, and the data grouping comprises:

segmenting the first data to obtain a plurality of data segments;
processing each of the data segments into a one-dimensional vector;
arranging the one-dimensional vectors in a second dimension to form a two-dimensional matrix; and
dividing the two-dimensional matrix into the plurality of groups of data, wherein
correspondingly, the data unit size is a size of the data segment.

**36.** The apparatus according to claim 34 or 35, wherein the layering information further comprises a data grouping parameter and a bit layering parameter;

if the data grouping is uneven division, the data grouping parameter comprises a quantity T of data groups and a quantity $d_n$ of pieces of data comprised in each of the groups of data, wherein n=1, 2, ..., or T; or
if the data grouping is even division, the data grouping parameter comprises a quantity T of data groups or a quantity d of pieces of data comprised in each of the groups of data; and
if the bit layering is uneven division, the bit layering parameter comprises a quantity $m_n$ of bit layers comprised in each of the groups of data and a quantity $b_{n,i}$ of bit planes comprised in each of the bit groups, wherein n=1, 2, ..., or T, and i=1, 2, ..., or $m_n$;

if the bit layering is uneven division and division manners in all the groups of data are the same, the bit layering parameter comprises a quantity m of bit layers in each of the groups of data and a quantity $b_i$ of bit planes comprised in each of the bit groups, wherein i=1, 2, ..., or m;

if the bit layering is even division, the bit layering parameter comprises a quantity $m_n$ of bit layers comprised in each of the groups of data or a quantity $b_n$ of bit planes comprised in each of the bit groups, wherein n=1, 2, ..., or T; or

if the bit layering is even division and division manners in all the groups of data are the same, the bit layering parameter comprises a quantity m of bit layers in each of the groups of data or a quantity b of bit planes comprised in each of the bit groups.

37. The apparatus according to any one of claims 33 to 36, wherein the layering information further comprises a quality requirement parameter; and correspondingly, the layering processing further comprises: selecting P layers of data from the N layers of data based on the quality requirement parameter.

38. The apparatus according to any one of claims 33 to 37, wherein the layering information is configured by the processing unit.

39. A data processing apparatus, comprising a processor and an interface circuit, wherein the interface circuit is configured to receive a signal from a data processing apparatus other than the data processing apparatus and transmit the signal to the processor, or send, to a data processing apparatus other than the data processing apparatus, a signal that is from the processor; and the processor is configured to implement the method according to any one of claims 1 to 13 by using a logic circuit or by executing instructions.

40. A data processing apparatus, comprising a processor and an interface circuit, wherein the interface circuit is configured to receive a signal from a data processing apparatus other than the data processing apparatus and transmit the signal to the processor, or send, to a data processing apparatus other than the data processing apparatus, a signal that is from the processor; and the processor is configured to implement the method according to any one of claims 14 to 19 by using a logic circuit or by executing instructions.

41. A computer program product, comprising instructions, wherein when the instructions are executed by a processor, the method according to any one of claims 1 to 19 is implemented.

42. A chip system, wherein the chip system comprises:
a processor and a memory, wherein the processor is coupled to the memory, and the memory is configured to store a program or instructions; and when the program or the instructions are executed by the processor, the method according to any one of claims 1 to 19 is implemented.

43. A computer-readable storage medium, wherein the computer-readable storage medium stores a computer program or instructions; and when the computer program or the instructions are run by a processor, the method according to any one of claims 1 to 19 is implemented.

FIG. 1

```
┌─────────────────────┐                              ┌─────────────────────┐
│   Terminal device   │                              │   Network device    │
└─────────────────────┘                              └─────────────────────┘
           │                                                     │
┌──────────────────────────────┐                                │
│ S201: Perform layering        │                               │
│ processing on first data      │                               │
│ based on layering             │                               │
│ information, to obtain N       │                               │
│ layers of data                │                               │
└──────────────────────────────┘                                │
           │                                                     │
┌──────────────────────────────┐                                │
│ S202: Separately perform      │                               │
│ coding and modulation on the  │                               │
│ N layers of data, to obtain N │                               │
│ bitstreams                    │                               │
└──────────────────────────────┘                                │
           │          S203: N bitstreams                        │
           │ ─────────────────────────────────────────────────► │
           │                              ┌──────────────────────────────┐
           │                              │ S204: Perform demodulation    │
           │                              │ and decoding on the N          │
           │                              │ bitstreams to obtain the N     │
           │                              │ layers of data                 │
           │                              └──────────────────────────────┘
           │                                        │
           │                              ┌──────────────────────────────┐
           │                              │ S205: Reconstruct the first   │
           │                              │ data from the N bitstreams    │
           │                              └──────────────────────────────┘
           │                                        │
```

FIG. 2

(a)                                                    (b)

FIG. 3

Data unit size

Total quantity of
pieces of data

| | | | |
|---|---|---|---|
| 1-1 | 1-2 | 2-1 | 2-2 |
| 1-3 | 1-4 | 2-3 | 2-4 |
| 3-1 | 3-2 | 4-1 | 4-2 |
| 3-3 | 3-4 | 4-3 | 4-4 |

Data → Segmentation → Data segment

Change of
each data
segment into
a one-
dimensional
vector

| | |
|---|---|
| 1-1 | 2-1 |
| 1-2 | 2-2 |
| 1-3 | 2-3 |
| 1-4 | 2-4 |
| 3-1 | 4-1 |
| 3-2 | 4-2 |
| 3-3 | 4-3 |
| 3-4 | 4-4 |

One-dimensional
vector

Arrangement
of the one-
dimensional
vectors into a
two-
dimensional
matrix

| | | | |
|---|---|---|---|
| 1-1 | 2-1 | 3-1 | 4-1 |
| 1-2 | 2-2 | 3-2 | 4-2 |
| 1-3 | 2-3 | 3-3 | 4-3 |
| 1-4 | 2-4 | 3-4 | 4-4 |

Two-dimensional
matrix

Grouping →

| | | | |
|---|---|---|---|
| 1-1 | 2-1 | 3-1 | 4-1 |
| 1-2 | 2-2 | 3-2 | 4-2 |
| 1-3 | 2-3 | 3-3 | 4-3 |
| 1-4 | 2-4 | 3-4 | 4-4 |

Data obtained
through the data
grouping

Data 1 obtained through
the data grouping

Data 2 obtained through
the data grouping

Data 3 obtained through
the data grouping

(a)

Data 1 obtained
through data
grouping

| | | | |
|---|---|---|---|
| 1-1 | 2-1 | 3-1 | 4-1 |
| 1-2 | 2-2 | 3-2 | 4-2 |

Binarization →

| | | | |
|---|---|---|---|
| 1-1-1 | 2-1-1 | 3-1-1 | 4-1-1 |
| 1-1-2 | 2-1-2 | 3-1-2 | 4-1-2 |
| 1-1-3 | 2-1-3 | 3-1-3 | 4-1-3 |
| 1-2-1 | 2-2-1 | 3-2-1 | 4-2-1 |
| 1-2-2 | 2-2-2 | 3-2-2 | 4-2-2 |
| 1-2-3 | 2-2-3 | 3-2-3 | 4-2-3 |

One-dimensional bit
vector

Total quantity of bit
planes

Arrangement
into a bit
matrix

Bit
plane 1
Bit
plane 2
Bit
plane 3

| | | | | | | | |
|---|---|---|---|---|---|---|---|
| 1-1-1 | 2-1-1 | 3-1-1 | 4-1-1 | 1-2-1 | 2-2-1 | 3-2-1 | 4-2-1 |
| 1-1-2 | 2-1-2 | 3-1-2 | 4-1-2 | 1-2-2 | 2-2-2 | 3-2-2 | 4-2-2 |
| 1-1-3 | 2-1-3 | 3-1-3 | 4-1-3 | 1-2-3 | 2-2-3 | 3-2-3 | 4-2-3 |

Bit matrix

Grouping →

| | | | | | | | |
|---|---|---|---|---|---|---|---|
| 1-1-1 | 2-1-1 | 3-1-1 | 4-1-1 | 1-2-1 | 2-2-1 | 3-2-1 | 4-2-1 |
| 1-1-2 | 2-1-2 | 3-1-2 | 4-1-2 | 1-2-2 | 2-2-2 | 3-2-2 | 4-2-2 |
| 1-1-3 | 2-1-3 | 3-1-3 | 4-1-3 | 1-2-3 | 2-2-3 | 3-2-3 | 4-2-3 |

Bit group

Bit
group 1
Bit
group 2

(b)

FIG. 4

FIG. 5

| T | $d_1$ | ... | $d_{T-1}$ | $m_1$ | $b_{1,1}$ | ... | $b_{1,m_1-1}$ | ... | $m_T$ | $b_{T,1}$ | ... | $b_{T,m_T-1}$ |
|---|---|---|---|---|---|---|---|---|---|---|---|---|

(a)

| T | $d_1$ | ... | $d_{T-1}$ | $m_n$ |
|---|---|---|---|---|

Or

| T | $d_1$ | ... | $d_{T-1}$ | $b_n$ |
|---|---|---|---|---|

(b)

| T | $m_1$ | $b_{1,1}$ | ... | $b_{1,m_1-1}$ | ... | $m_T$ | $b_{T,1}$ | ... | $b_{T,m_T-1}$ |
|---|---|---|---|---|---|---|---|---|---|

Or

| $d_n$ | $m_1$ | $b_{1,1}$ | ... | $b_{1,m_1-1}$ | ... | $m_T$ | $b_{T,1}$ | ... | $b_{T,m_T-1}$ |
|---|---|---|---|---|---|---|---|---|---|

(c)

| T | $m_n$ |
|---|---|

or

| T | $b_n$ |
|---|---|

or

| $d_n$ | $m_n$ |
|---|---|

or

| $d_n$ | $b_n$ |
|---|---|

(d)

FIG. 6

Terminal device

Network device

S701: Perform layering processing on first data based on layering information, to obtain N layers of data

S702: Separately perform coding and modulation on the N layers of data, to obtain N bitstreams

S703: N bitstreams

S704: Perform demodulation and decoding on the N bitstreams to obtain the N layers of data

S705: Reconstruct the first data from the N bitstreams

FIG. 7

```
┌──────────────────┐                              ┌──────────────────┐
│  Terminal device │                              │  Network device  │
└──────────────────┘                              └──────────────────┘
         │                                                  │
┌────────────────────────────┐                              │
│ S801: Perform layering     │                              │
│ processing on first data   │                              │
│ based on layering          │                              │
│ information, to obtain N    │                              │
│ layers of data             │                              │
└────────────────────────────┘                              │
         │                                                  │
         │  S802: Modulation and coding indication          │
         │  information, where the modulation and           │
         │  coding indication information indicates an       │
         │  MCS corresponding to each layer of data in       │
         │◄────────────── P layers of data ─────────────────│
┌────────────────────────────┐                              │
│ S803: Separately perform   │                              │
│ coding and modulation on   │                              │
│ the P layers of data based │                              │
│ on the MCS corresponding   │                              │
│ to each layer of data in   │                              │
│ the P layers of data, to   │                              │
│ obtain P bitstreams        │                              │
└────────────────────────────┘                              │
         │         S804: N bitstreams                        │
         │─────────────────────────────────────────────────►│
         │                              ┌───────────────────────────────┐
         │                              │ S805: Perform demodulation and│
         │                              │ decoding on the N bitstreams  │
         │                              │ to obtain the N layers of data│
         │                              └───────────────────────────────┘
         │                                                  │
         │                              ┌───────────────────────────────┐
         │                              │ S806: Reconstruct the first   │
         │                              │ data from the N bitstreams    │
         │                              └───────────────────────────────┘
         │                                                  │
```

FIG. 8

| Bitmap (N bits) | $L_1$ | $L_2$ | ... | $L_N$ | $C_1$ | $C_3$ | ... | $C_N$ |
|---|---|---|---|---|---|---|---|---|

FIG. 9

FIG. 10

$$TB1 = Res_1 + Res_2 + Res_{3,1}$$

$$TB2 = Res_{3,2} + Res4$$

FIG. 11

| Terminal device | Network device |
|---|---|

S1201: Perform layering processing on first data based on layering information, to obtain N layers of data

S1202: Modulation and coding indication information, where the modulation and coding indication information indicates an MCS corresponding to each layer of data in P layers of data

S1203: Separately perform coding and modulation on the P layers of data based on the MCS corresponding to each layer of data in the P layers of data, to obtain P bitstreams

S1204: N bitstreams

S1205: Perform demodulation and decoding on the N bitstreams to obtain the N layers of data

S1206: Reconstruct the first data from the N bitstreams

FIG. 12

Data processing apparatus 1300

Processing unit 1310

Transceiver unit 1320

FIG. 13

Data processing apparatus 1400

Processor 1410

Interface circuit 1420

Memory 1430

FIG. 14

## INTERNATIONAL SEARCH REPORT

| International application No. |
|---|
| **PCT/CN2022/135587** |

### A. CLASSIFICATION OF SUBJECT MATTER

H04L27/00(2006.01)i; H04L27/36(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNKI, CNTXT, ENTXTC: 数据, 分组, 比特, 分层, 编码, 调制, 码流, 平面, 矩阵, 分块, 向量, 复数, 质量, 调制编码方案;
ENTXT, 3GPP: data, packet, bit, layer, slicing, code, modulate, stream, plane, matrix, block, vector, complex, quality, QoS, MCS

### C. DOCUMENTS CONSIDERED TO BE RELEVANT

| Category* | Citation of document, with indication, where appropriate, of the relevant passages | Relevant to claim No. |
|---|---|---|
| X | CN 115225201 A (HUAWEI TECHNOLOGIES CO., LTD. et al.) 21 October 2022 (2022-10-21) <br> description, paragraphs [0089]-[0191] | 1, 9, 12-14, 18-20, 28, 31-33, 37-43 |
| A | CN 112217598 A (HUAWEI TECHNOLOGIES CO., LTD.) 12 January 2021 (2021-01-12) <br> entire document | 1-43 |
| A | CN 115276733 A (HUAWEI TECHNOLOGIES CO., LTD.) 01 November 2022 (2022-11-01) <br> entire document | 1-43 |
| A | US 2015139293 A1 (WI-LAN LABS, INC.) 21 May 2015 (2015-05-21) <br> entire document | 1-43 |
| A | FUJITSU. "An Efficient Hierarchical Modulation based DL Data Transmission for LTE-Advanced" <br> *3GPP tsg_ran\WG1_RL1 R1-090384*, 08 January 2009 (2009-01-08), <br> entire document | 1-43 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 August 2023** | **25 August 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/135587**

| Patent document cited in search report | | | Publication date (day/month/year) | Patent family member(s) | | | Publication date (day/month/year) |
|---|---|---|---|---|---|---|---|
| CN | 115225201 | A | 21 October 2022 | None | | | |
| CN | 112217598 | A | 12 January 2021 | None | | | |
| CN | 115276733 | A | 01 November 2022 | None | | | |
| US | 2015139293 | A1 | 21 May 2015 | WO | 2015073488 | A1 | 21 May 2015 |

Form PCT/ISA/210 (patent family annex) (July 2022)